# EUROPÄISCHE PATENTSCHRIFT

(11) **EP 3 830 009 B1**
(45) Veröffentlichungstag und Bekanntmachung des Hinweises auf die Patenterteilung: **28.09.2022**
(21) Anmeldenummer: 19752118.0
(22) Anmeldetag: 23.07.2019
(51) Int. Cl.: B65G 47/08, B65G 47/252, B65G 47/32

(54) **VERFAHREN, VORRICHTUNG UND SYSTEM ZUM GRUPPIEREN, INSBESONDERE PALETTIEREN VON PRODUKTROHLINGEN**
METHOD, DEVICE, AND SYSTEM FOR GROUPING PRODUCT BLANKS, IN PARTICULAR PALLETIZING PRODUCT BLANKS
PROCÉDÉ, DISPOSITIF ET SYSTÈME PERMETTANT DE GROUPER, EN PARTICULIER DE PALETTISER, DES ÉBAUCHES DE PRODUIT

(30) Priorität: 01.08.2018 DE 102018118716
(43) Veröffentlichungstag der Anmeldung: 09.06.2021
(73) Patentinhaber: PackSys Global AG, 8630 Rüti ZH (CH)
(72) Erfinder: ALIG, Lukas, 7000 Chur (CH); BUNER, Andreas, 8890 Flums (CH); RUTISHAUSER, Remo, 9424 Rheineck (CH)
(74) Vertreter: Patent- und Rechtsanwälte Behrmann Wagner PartG mbB
(86) Internationale Anmeldenummer: PCT/EP2019/069803
(87) Internationale Veröffentlichungsnummer: WO 2020/025395

(56) Entgegenhaltungen:
- EP-A1- 0 156 127
- EP-A1- 3 118 125
- DE-A1- 4 445 108

## Beschreibung

Die Erfindung betrifft ein Verfahren zum Gruppieren, insbesondere Palettieren oder Vorpalletieren von, leeren, als Dosen, Tuben oder Kartuschen ausgebildeten länglichen Produkten. Ferner betrifft die Erfindung eine Gruppiervorrichtung, insbesondere eine Gruppiervorrichtung zum Palettierer oder Vorpalettieren von, leeren, als Dosen, Tuben oder Kartuschen ausgebildeten länglichen Produkten. Schließlich betrifft die vorliegende Erfindung ein System umfassend eine Gruppiervorrichtung sowie eine Herstellungseinrichtung zum Herstellen der zu gruppierenden Produkte und zum Versorgen der die Produkte anliefernden Fördereinrichtung.

Gruppiervorrichtungen zur Gruppierung von in der Regel im Wesentlichen zylindrischen Produkten oder Produkteinheiten sowie Produktrohlingen, insbesondere in der Form von leeren Dosen, Tuben oder Kartuschen sind in unterschiedlichsten Ausführungen bekannt. Derartige Produkte werden in der Regel auf eine Herstellungsvorrichtung hergestellt und anschließend verpackt und einem die leeren Produkte befüllenden Hersteller geliefert oder zur Verfügung gestellt. Dementsprechend ist die Aufgabe bekannter Gruppiervorrichtungen sowie Gruppierverfahren, die Produkte in relativ große Einheiten zusammenzufassen, insbesondere zu verpacken oder vor- und/oder zwischenzuverpacken und zu Abfüllbetrieben oder Befüllbetrieben weiterzubefördern. Zum Zusammenstellen dieser Einheiten kann vorgesehen sein, dass, insbesondere bei identischen Produkten, die Produkte in einer aufrechten Ausrichtung, also in einer Lage, in der ihre Längsmittel- oder Längssymmetrieachse senkrecht verläuft, zu einer Lage, insbesondere zu einer Art dichtesten Packung in einer Lage zusammengefasst oder zusammengestellt werden und dann in der Lage zwischenverpackt und mit mehreren übereinander angeordneten Lagen auf einer Ablagevorrichtung, insbesondere einer Palette endverpackt werden, sodass die Ablagevorrichtung, insbesondere die Paletten mit mehreren übereinander angeordneten, und ggf. in sich zwischenverpackten Lagen von lückenlos oder aneinander angrenzend angeordneten Produkten an einen Abnehmer, insbesondere einen Befüller oder Abfüller zur Verfügung gestellt werden können.

Für derartige Gruppierverfahren, Gruppiervorrichtungen und Systeme ist in der Regel gegeben, dass seitens der Herstellungsvorrichtung oder seitens einer Produktionslinie zur Herstellung der Produkte die Produkte in einem liegenden Zustand die Produktionslinie oder die Herstellungsvorrichtung verlassen. Eine liegende Anordnung oder Ausrichtung der Produkte kann insbesondere dann vorliegen, wenn die Längsmittelachsen oder Längssymmetrieachsen, besonders bevorzugt jedweder Längsachse der Produkte im Wesentlichen horizontal oder waagerecht ausgerichtet ist. Dementsprechend ist für Gruppierverfahren und Gruppiervorrichtungen, die mit derartigen Produktionslinien oder Herstellungsvorrichtungen zusammenarbeiten oder verbunden sind im Rahmen der Gruppierung zumindest auch die Aufgabe zu lösen, die Produkte aufzurichten, also deren Längsachse aus der Waagerechten in die Senkrechte zu überführen.

Dazu sind aus dem Stand der Technik verschiedene Verfahren und Vorrichtungen bekannt. Beispielsweise ist aus dem Stand der Technik bekannt, das Aufrichten oder das Umorientieren der Längsachse mit einem Kurvenband zu bewerkstelligen, welches beispielsweise Führungselemente in Form einer Helix aufweist und somit neben der Umlenkung der Produkte bezüglich ihrer Bewegungsrichtung auch das Aufrichten oder Aufstellen der Produkte gewährleisten kann. Nachteilig an diesem Stand der Technik ist, dass entsprechende Vorrichtungen viel Platz beanspruchen, da das Verkippen, Rotieren oder Aufrichten der Produkte nur mit einer begrenzten Geschwindigkeit pro Strecke oder Raumeinheit erfolgen kann, sodass Gruppiervorrichtungen vorzusehen sind, die einen erheblichen Raum im Rahmen des Produktions- und Verpackungsprozesses einnehmen. Ein weiterer, je nach Hersteller der Produkte, noch gravierender Nachteil liegt jedoch darin, dass die bekannten Gruppiervorrichtungen und Gruppierverfahren stark an die Abmessungen, insbesondere an die Durchmesser des Produktes gebunden sind, da beispielsweise die Führungselemente eines Kurvenbandes exakt auf die Produkte, insbesondere den Produktmesser zugeschnitten sind. Dies bedeutet aber auch, dass für eine Umstellung der Produktion und Verpackung auf ein anderes Produkt mit einem anderen Maß, insbesondere mit einem anderen Durchmesser, hoher oder sogar unwirtschaftlicher Aufwand betrieben werden muss. Da es jedoch in vielerlei Hinsicht erforderlich oder besonders vorteilhaft sein kann mit einer einzigen oder einer gemeinsamen Produktionslinie oder Herstellungsvorrichtung Produkte unterschiedlicher Abmessungen, insbesondere unterschiedlicher Durchmesser herzustellen, besteht der Wunsch nach einem Gruppierverfahren und einer Gruppiervorrichtung, welche ein weitestgehend vom Durchmesser des Produkts unabhängiges Gruppieren, insbesondere unter Aufrichten der Produkte ermöglicht.

Die US 5,454, 465 A betrifft ein System zum Handhaben von zylindrischen Dosen oder dergleichen und zum Fördern dieser Behälter zu und in Träger für hydrostatische Sterilisatoren. Nach dem Befüllen und Verschließen der Dosen oder Behälter werden diese stehend zu einem Aufnahmebereich transportiert. Eine Schraubengruppe wird periodisch betätigt, nimmt die Dosen aus dem Aufnahmebereich, greift ihre zylindrischen Seitenwände und legt sie in einen Dosenstift ab. Dieser Dosenstift wird seitlich in die Träger des Sterilisators gerollt, während sie an ihm vorbeigeführt werden. Die Schraubenanordnung beinhaltet ein paar horizontal angeordneter Schrauben, die beide nach unten und nach innen drehbar und deren Achsen im Abstand voneinander angeordnet sind.

Die EP 0 202 148 A1 offenbart eine Vorrichtung zum Aufrichten von Gegenständen, insbesondere Behälter mit Boden und Halsseite. Die Vorrichtung sieht dabei vor, dass eine Achse eines Rades koaxial mit einer Umlenkrolle eines Abgabeförderers zusammenwirkt. Dadurch können die Behälter, beispielsweise die Flaschen, aufgerichtet und angehoben werden.

Die die US 7,308,779 B2 beschreibt ein Verfahren und eine Vorrichtung zum Verpacken von Behältern, beispielsweise Tuben, wobei die Tuben von einer Produktionslinie kommen und einer Gruppiereinheit zugeführt werden. Die Gruppiereinheit besteht aus einem Förderband mit Produkthaltern. Die Tuben werden gruppenweise über einen Schrittmotor zugeführt. Ein Schieber drückt die Tuben in die richtige Position auf einen Dornhalter einer Verpackungseinheit. Die Dornhalterung besteht aus einer Platte die mittels einer Kolben-Zylinder-Einheit hin und her bewegt werden kann und die aus der horizontalen Halteposition in die vertikale Ausgabeposition schwenkbar ist. Die Tuben werden mit dem Schieber auf die Dornen aufgeschoben die auf der Platte montiert sind. Die Tuben werden so exakt ausgerichtet und können ohne relative Verschiebung oder Neigung der Tuben in einen Karton gefüllt werden.

Die DE 44 45108 A1 handelt von einer Umsetzvorrichtung für mit einer ersten Transporteinrichtung angelieferte Güter, insbesondere Aluminiumdosen, die Gruppenweise als in Transportrichtung der ersten Transportrichtung weisende Reihe von der ersten Transporteinrichtung auf eine zweite Transporteinrichtung überführt werden, wobei das Abstellen der Güter auf die zweite Transporteinrichtung derart erfolgt, dass sich die Reihe quer zu dessen Transportrichtung erstreckt.

Die EP 3 118 125 A1 offenbart ein Verfahren und eine Vorrichtung, zum Verpacken von Verpackungen in Kisten oder Kartons, wobei die Verpackungen von einem ersten Förderband auf ein zweites intermittierend angetriebenes Förderband übergeben werden, welches dann die Verpackungen zu einem Roboterarm weiterführt, der die Verpackungen vom zweiten Förderband entnimmt und in einen Aufstellbereich überführt. Die EP 3 118 125 A1 offenbart insbesondere ein Verfahren zum Gruppieren von Verpackungen, wobei die Verpackungen mit einer anliefernden Fördereinrichtung angeliefert und mit einer Seite auf ein Förderband abgelegt werden und mit diesem mit einer Fördergeschwindigkeit entlang einer Förderrichtung gefördert werden, wobei aus den geförderten Verpackungen eine Verpackungsgruppe umfassend mehrere Verpackungen mit einem Transfermittel gleichzeitig von dem Förderband entnommen werden, wobei die Transfermittel im Anschluss an die Entnahme die Verpackungen der Verpackungsgruppe gleichzeitig durch eine Schwenkbewegung senkrecht zur Förderrichtung aufgerichtet werden, und im aufgerichteten Zustand auf einer Ablage als lückenlose sich entlang der Förderrichtung erstreckende Reihe abgestellt werden.

Der EP 0 156 127 A1 ist eine Palettiervorrichtung zum Palettieren von quaderförmigen Produkten zu entnehmen.

Ausgehend von dem beschriebenen Stand der Technik und dessen Nachteilen liegt die Aufgabe der vorliegenden Erfindung darin, ein Verfahren zum Gruppieren, insbesondere Palettieren oder Vorpalletieren von entsprechenden Produkten vorzusehen, welches besonders platzsparend ausgeführt werden kann und zudem mittels geringster Anpassungen für Produkte mit unterschiedlichsten Maßen, insbesondere unterschiedlichsten Durchmessern durchgeführt oder angewendet werden kann.

Diese Aufgabe wird gelöst durch ein Verfahren zum Gruppieren, insbesondere Palettieren oder Vorpalletieren von, leeren, als Dosen, Tuben, oder Kartuschen ausgebildeten länglichen Produkten, wobei die Produkte mit einer anliefernden Fördereinrichtung bevorzugt von einer Produktionslinie zur Herstellung der Produkte, angeliefert und mit einer zylindrischen Mantelfläche lückenlos auf ein Förderband abgelegt werden und mit diesem mit einer Fördergeschwindigkeit entlang einer Förderrichtung gefördert werden, wobei aus den lückenlos geförderten Produkten eine Produktgruppe umfassend mehrere lückenlos aneinander angrenzender Produkte mit einem Transfermittel gleichzeitig von dem Förderband entnommen werden, wobei die Transfermittel während der Entnahme synchron mit dem Förderband und der darauf geförderten, zu entnehmenden Produktgruppe entlang der Förderstrecke von einer Anfangsposition in Förderrichtung bis zu einer Entnahmeposition verstellt, insbesondere verfahren werden, und im Anschluss an die Entnahme die Produkte der Produktgruppe gleichzeitig durch eine Schwenkbewegung, insbesondere der Transfermittel, senkrecht zur Förderrichtung aufgerichtet, insbesondere um 90° aufgerichtet werden, und im aufgerichteten Zustand auf einer Ablage als lückenlos, sich entlang der Förderrichtung erstreckenden Reihe abgestellt werden.

Die Grundidee der Erfindung basiert dementsprechend darauf, dass, nicht wie bekannt, das Aufrichten der von der Produktionslinie oder Herstellungsvorrichtung kommenden Produkte kontinuierlich und damit für jedes Produkt einzeln erfolgt, sondern mittels der Transfermittel jeweils für eine lückenlos aneinander angrenzende Gruppe von Produkten, also gruppenweise, erfolgt. Durch die der Erfindung zugrundeliegende Erkenntnis, dass ein derart gruppenweises oder chargenweises Aufrichten auch bei einer hohen Kadenz der anliefernden Fördereinrichtung der Produktionslinie gelingen kann, resultiert der erfindungsgemäße Vorteil, dass zur gruppenweisen Entnahme, Aufrichtung und Ablage der Produkte nur ein minimaler Platzbedarf benötigt wird und darüber hinaus eine besonders einfache Anpassung des Verfahrens an die unterschiedlichsten Produkte, insbesondere unterschiedlichsten Durchmesser von Produkten erreicht werden kann. Das erfindungsgemäße Verfahren sieht also in der Abkehr vom Stand der Technik, in dem ein jeweils einzelnes Produkt einen Weg beschritten oder hinter sich gelassen hat und beim Beschreiten dieses Weges entsprechend aufgerichtet wurde, vor, dass trotz der mitunter sehr hohen Stückzahl an lückenlos auf einem Förderband abgelegten und zur Gruppierung oder Palettierung angelieferten Produkten pro Zeitintervall ein Verfahren möglich ist, bei dem, ohne dass es zu Ausschuss oder Verlust von angelieferten, insbesondere lückenlos angelieferten Produkten kommt, eine Gruppe von Produkten entnommen, aufgerichtet und anschließend abgelegt werden kann, und das Verfahren anschließend von neuem beginnen kann, also wiederum eine entsprechende Gruppe von lückenlos aneinander angrenzenden Produkten entnommen, aufgerichtet und abgelegt wird.

Gemäß einer ersten vorteilhaften Ausführungsform des Verfahrens kann vorgesehen sein, dass die Produkte auf einem sich senkrecht zur Förderrichtung bewegenden Kompaktierungsförderband als lückenlos sich entlang der Förderrichtung erstreckenden Reihe abgestellt und vom Kompaktierungsförderband als Reihe in Richtung eines Anschlags des Kompaktierungsförderbandes, insbesondere ebenfalls senkrecht zur Förderrichtung, abtransportiert werden.

Außerdem kann vorteilhaft vorgesehen sein, dass die Transfermittel nach dem Abstellen der Produktgruppe auf der Ablage, insbesondere dem Kompaktierungsförderband zur Anfangsposition, insbesondere zur Anfangsposition der Transfermittel zurückkehren, wobei die Zeitspanne zum abermaligen Erreichen der Anfangsposition geringer oder gleich lang ist, als das Verhältnis des Abstands zwischen den Längsachsen der jeweils äußeren, zusammen entnommenen Produkte der Produktgruppe und der Fördergeschwindigkeit. Beispielsweise kann vorgesehen sein, dass zum Gruppieren, insbesondere zum Palettieren von Produkten Produktgruppen entnommen, aufgerichtet und abgelegt werden sollen, die im Wesentlichen eine abgestellte Produktreihe ausbilden, die sich über die gesamte Länge einer Palettenseite erstreckt, dass dann entsprechende Produktgruppen entnommen, aufgerichtet und abgestellt werden müssen, deren Längsachsen der jeweils äußeren Produkte einer Produktgruppe oder entsprechend aufgestellter Produktreihen einen Abstand von zwischen 100cm und 120cm aufweisen, wobei das Förderband eine die Produkte anliefernde Fördergeschwindigkeit aufweist, die sich insbesondere an der Herstellungsgeschwindigkeit der Produktionslinie oder der Herstellungsvorrichtung orientiert. Das erfindungsgemäße Verfahren ermöglicht, dass die Transfermittel ausgehend von der Anfangsposition die Entnahme der Produktgruppe, das Aufrichten und Abstellen der Produktgruppe sowie die Rückkehr an die Anfangsposition in einer Zeitspanne ermöglichen, die kleiner oder zumindest gleich groß ist, wie der Quotient aus besagtem Abstand der äußeren Längsachsen der Produktgruppe und der von der Produktionslinie bestimmten oder zumindest mitbestimmten Fördergeschwindigkeit des Förderbandes.

Dadurch wird in besonders vorteilhafter Weise erreicht, dass die Produkte allesamt, insbesondere ohne Verluste, Ausschuss oder sonstige Ausnahmen von dem Förderband entnommen werden, da in der Zeitspanne, in der die Transfermittel zur Anfangsposition zurückkehren gerade eine entsprechende Länge oder Anzahl an Produkten durch das Förderband nachgeliefert wurde. Dies hat auch den Vorteil, dass kein Mittel vorgesehen oder Verfahrensschritte vorgesehen werden müssen, die das Entnehmen, Aufrichten und Ablegen von Produkten sicherstellen, die auf dem Förderband übrig bleiben oder nicht von den entsprechenden Transfermitteln entnommen, aufgerichtet und abgestellt werden.

Gemäß einer weiteren besonders bevorzugten Ausgestaltungsform des Verfahrens kann vorgesehen sein, dass die Zeitspanne zwischen zwei aufeinanderfolgenden Positionierungen der Transfermittel an der Anfangsposition geringer ausfällt als 10s, bevorzugt geringer ausfällt als 8s, besonders bevorzugt geringer ausfällt als 6s. Dadurch kann bei einer Anlieferungs- und/oder Produktionsliniengeschwindigkeit bis zu 250 Produkte pro Minute und Produktdurchmessern zwischen 22mm und 84mm bei einer entsprechenden Dimensionierung der Transfermittel, insbesondere abgestimmt auf die Kanten- oder Seitenlänge einer Ablagevorrichtung, insbesondere einer Palette, sichergestellt werden, dass mit den Transfermitteln jedes der lückenlos angelieferten Produkte entnommen, aufgerichtet und abgelegt wird.

Gemäß einer weiteren vorteilhaften Ausgestaltung des Verfahrens kann vorgesehen sein, dass im Rahmen der Entnahme der Produkte, die jeweils zusammen zu entnehmenden Produkte der Produktgruppe, bevorzugt jeweils einzeln, mit Haftmitteln der Transfermittel lösbar verbunden werden und die Verbindung erst beim Abstellen der Produktgruppe auf dem Kompaktierungsförderband wieder aufgehoben wird oder aufgelöst ist, insbesondere vollständig aufgehoben oder aufgelöst wird. Die jeweils einzelne, zumindest zeitweise Verbindung zwischen Transfermittel und zu entnehmendem Produkt, insbesondere zwischen Haftmitteln der Transfermittel und zu entnehmendem Produkt stellt einerseits eine besondere Herausforderung für das erfindungsgemäße Verfahren dar, da aufgrund der fragilen Natur der zu entnehmenden Produkte, eine hochpräzise, schnelle und keine zu große Kraft auf das Produkt aufbauende Herstellung und Wiederauflösung der Verbindung erreicht werden muss. Andererseits wird dadurch der besondere Vorteil realisiert, dass bei der vorliegenden Ausführungsform transfermittelseitig bei einem Wechsel der Produktdurchmesser lediglich die Haftmittel angepasst und/oder ausgetauscht werden müssen, um vorrichtungsseitig auf die Umstellung des Durchmessers der Produkte reagieren zu können. Verfahrensseitig ist entsprechend zu realisieren, dass einerseits, wie oben bereits beschrieben, die Transfermittel während der Entnahme synchron mit dem Förderband und der darauf geförderten, zu entnehmenden Produktgruppe entlang der Förderstrecke von einer Anfangsposition in Förderrichtung bis zu einer Entnahmeposition verstellt, insbesondere verfahren werden und darüber hinaus erreicht werden muss, dass die jeweilige Relativposition zwischen Produkt, insbesondere Einzelprodukt und den Haftmitteln der Transportmittel präzise zueinander ausgerichtet oder angeordnet sind, um ein sicheres und beschädigungsfreies Entnehmen der Produkte der Produktgruppe zu gewährleisten.

Ebenfalls kann gemäß einer vorteilhaften Ausgestaltung des Verfahrens vorgesehen sein, dass im Rahmen der Entnahme der Produkte die Haftmittel der Transfermittel eine Verbindung mit den Produkten über einen seitens der Haftmittel aufgebauten Unterdruck zwischen den Haftmitteln und der Produktoberfläche, insbesondere der, bevorzugt zylindrischen Mantelfläche der Produkte, erzeugen. Auch diese besonders vorteilhafte Ausführungsform wird durch eine besonders präzise Ansteuerung der Transfermittel und/oder durch eine entsprechend präzise vorgegebene Fördergeschwindigkeit des Förderbandes realisiert.

Ebenfalls kann in einer vorteilhaften Ausgestaltung des Verfahrens vorgesehen sein, dass im Rahmen der Entnahme die Produktgruppe von den Transfermitteln gleichzeitig vom Förderband angehoben werden, wobei die Transfermittel während des Anhebens synchron mit dem Förderband und der darauf geförderten, zu entnehmenden Produktgruppe entlang der Förderstrecke von einer Anhebeposition in Förderrichtung bis zu einer Entnahmeposition verstellt, insbesondere verfahren werden. Dadurch wird sichergestellt, dass ein jeweils einzelnes und trotzdem gleichmäßiges Entnehmen der Produktgruppe ein entsprechendes Anheben der Produkte aus oder von dem Förderband sichergestellt wird. Damit wird gleichermaßen die Voraussetzung geschaffen, für ein gleichzeitiges oder synchrones Aufrichten und Abstellen aller Produkte der jeweils entnommenen Produktgruppe. Zur entsprechend gleichzeitigen Entnahme unter gleichzeitigem Anheben der Produkte muss folglich eine Überlagerung der Relativbewegung der Transfermittel vorgesehen sein. Einerseits muss erreicht werden, dass die Transfermittel weiterhin synchron mit dem Förderband in Förderrichtung oder entlang der Förderstrecke verfahren und/oder verstellt werden. Gleichzeitig muss sichergestellt sein, dass die Transfermittel ein Anheben, insbesondere ein gleichzeitiges Anheben aller Produkte durch eine entsprechend in vertikaler Richtung gerichtete Bewegung bewirken.

Eine weitere besonders vorteilhafte Ausgestaltung des Verfahrens kann vorsehen, dass die Transfermittel Produktgruppen jeweils alternierend um einen Radius der, bevorzugt zylindrischen, Mantelfläche der Produkte versetzt auf der Ablage, insbesondere auf dem Kompaktierungsförderband abstellen. Dadurch wird erreicht, dass die jeweils aktuell abgestellte und insbesondere mit dem Kompaktierungsförderband abtransportierte Reihe oder Gruppe von Produkten versetzt zu einer zuvor abgestellten und abtransportieren Reihe von Produkten abgestellt und ggf. auf den Anschlag des Kompaktierungsförderbandes hin bewegt wird. Dies führt jedoch wiederum dazu, dass, insbesondere bei zylindrischen oder im Wesentlichen zylindrischen Produkten die abgestellt, insbesondere abgestellt und aufeinander auflaufen oder aneinander anstehen auf der Ablage oder dem mit dem Anschlag versehenen Kompaktierungsförderband eine größtmögliche Dichte oder eine möglicht hohe Packung pro Raumeinheit erreichen. Die entsprechend alternierende, insbesondere alternierend versetze Ablage oder Abstellung der Produkte oder einer Reihe von aufgerichteten Produkten auf der Ablage, insbesondere dem Kompaktierungsförderband, kann gemäß der vorliegenden Ausführungsform durch eine entsprechende Ansteuerung der Transfermittel erreicht werden. Dazu kann entsprechend in den Verfahrensschritten zur Steuerung der Transfermittel das jeweils zu entnehmende, aufzurichtende und abzustellende Produkt, insbesondere dessen Durchmesser und/oder Radius identifiziert werden.

Bei der Gruppiervorrichtung wird die oben genannte Aufgabe dadurch gelöst, dass die Gruppiervorrichtung, insbesondere zum Palettieren oder Vorpalettieren von, leeren, als Dosen, Tuben oder Kartuschen ausgebildeten länglichen Produkten ausgebildet zum Durchführen des vorangehend beschriebenen Verfahrens eine die Produkte bevorzugt von einer Produktionslinie zur Herstellung der Produkte anliefernde Fördereinrichtung sowie Transfermittel zum Transferieren einer lückenlosen Produktgruppe von der Fördereinrichtung, insbesondere einem Förderband der Fördereinrichtung, auf einer Ablage unter Aufrichtung der Produkte sowie Antriebs- und Steuermittel für die Antriebsmittel umfasst, wobei die Steuermittel die Antriebsmittel derart steuern, dass die Produkte angeliefert und mit einer zylindrischen Mantelfläche lückenlos auf ein Förderband der Fördereinrichtung abgelegt werden und mit diesem mit einer Fördergeschwindigkeit entlang einer Förderrichtung gefördert werden, wobei aus den lückenlos geförderten Produkten eine Produktgruppe umfassend mehrere lückenlos aneinander angrenzende Produkte mit den Transfermitteln gleichzeitig von dem Förderband entnommen werden, wobei die Transfermittel während der Entnahme synchron mit dem Förderband und der darauf geförderten, zu entnehmenden Produktgruppe entlang der Förderstrecke von einer Anfangsposition in Förderrichtung bis zu einer Entnahmeposition verstellt, insbesondere verfahren werden und im Anschluss an die Entnahme die Produkte der Produktgruppe gleichzeitig durch eine Schwenkbewegung, insbesondere der Transfermittel, senkrecht zur Förderrichtung aufgerichtet, insbesondere um 90° aufgerichtet werden, und im aufgerichteten Zustand auf einer Ablage als lückenlose, sich entlang der Förderrichtung erstreckende Reihe von Produkten abgestellt.

Durch die erfindungsgemäße Gruppiervorrichtung wird erreicht, dass auf kleinstem Raum und bei einer hohen Kadenz der angelieferten Produkte ein Entnehmen, Aufrichten und Ablegen oder Abstellen der Produkte erreicht wird, um eine Vorverpackung oder Verpackung im Rahmen eines Palletierens der Produkte zu gewährleisten. Dabei zeichnet sich die Gruppiervorrichtung, insbesondere die Transfermittel der Gruppiervorrichtung durch das gleichzeitige Entnehmen einer aneinander angrenzenden lückenlosen Gruppe von Produkten auch dadurch aus, dass eine verhältnismäßig leichte oder unkomplizierte Anpassung der Gruppiervorrichtung, insbesondere der Transfermittel und/oder des Förderbandes auf geänderte Produkte, insbesondere auf Produkte mit unterschiedlichem Durchmesser der, bevorzugt zylindrischen Mantelfläche der Produkte erreichbar ist. Der besondere Vorteil eines geringen Platzbedarfs der Vorrichtung wird insbesondere dadurch realisiert, dass die Produktgruppe gemeinsam, insbesondere gleichzeitig von dem Förderband entnommen wird und nach dem Aufrichten als entsprechend zusammenhängend und auf die Vorverpackung oder Verpackung zugeschnittene Reihe von Produkten auf der Ablage, insbesondere auf dem Kompaktierungsförderband abgelegt oder abgestellt wird, sodass einerseits eine Mehrzahl von Produkten gleichzeitig entnommen, aufgerichtet und abgestellt werden kann und zudem die entnommene Produktgruppe oder die entnommene Anzahl lückenlos aneinander angrenzender Produkte entsprechend auf die Anforderungen der Gruppierung, insbesondere auf die Anforderung der Palettierung zugeschnitten ist.

Gemäß einer ersten vorteilhaften Ausgestaltung der Gruppiervorrichtung kann vorgesehen sein, dass die Ablage als Kompaktierförderband ausgebildet ist und die Produkte auf dem sich senkrecht zur Förderrichtung bewegenden Kompaktierungsförderband als lückenlose, sich entlang der Förderrichtung erstreckende Reihe von Produkten abgestellt und als Reihe in Richtung eines Anschlags des Kompaktierungsförderbandes, insbesondere in Kompaktierungsrichtung, abtransportiert werden.

Vorteilhaft kann zudem vorgesehen sein, dass die Transfermittel einen Roboterarm mit zumindest zwei über ein Gelenk verbundene Gelenkarme aufweist, an dessen frei beweglichem Ende eine wechselbare Gruppenaufnahmevorrichtung, insbesondere eine in Gruppenaufnahmeplatte angeordnet ist. Ein entsprechender Roboterarm bietet den Vorteil, dass durch eine entsprechende Überlagerung der Einzelbewegungen der Gelenkarme und Gelenke komplexe Bewegungen sowie komplexe Bewegungsabläufe präzise realisiert werden können. Außerdem bietet ein Roboterarm zusammen mit einer entsprechenden Gruppenaufnahmevorrichtung, insbesondere Gruppenaufnahmeplatte, den Vorteil, dass die Gruppiervorrichtung besonders platzsparend ausgebildet sein kann. Das nicht frei bewegliche Ende des Roboterarms, also das dem freien Ende gegenüberliegende Ende des Roboterarms kann bevorzugt fest mit der Gruppiervorrichtung verbunden sein. Durch den Roboterarm, insbesondere in Verbindung mit der Gruppenaufnahmevorrichtung lässt sich über die entsprechenden Antriebsmittel und Steuermittel für die Antriebsmittel, insbesondere die Antriebsmittel für den Roboterarm und die Steuermittel für die Antriebsmittel des Roboterarms erreichen, dass die Transfermittel, insbesondere die Gruppenentnahmevorrichtung während der Entnahme der Produkte der Produktgruppe synchron mit dem Förderband und den darauf geförderten, zu entnehmenden Produkten der Produktgruppe entlang der Förderstrecke von einer Anfangsposition in Förderrichtung bis zu einer Entnahmeposition verstellt insbesondere verfahren wird und im Anschluss an die Entnahme die Produktgruppe, insbesondere die Produkte der Produktgruppe, gleichzeitig durch eine Schwenkbewegung der Transfermittel aufgerichtet werden.

Auch erlauben die Realisierung der Transfermittel durch einen Roboterarm in Verbindung mit einer Gruppenaufnahmevorrichtung sowie das Vorsehen entsprechender Antriebsmittel für den Roboterarm und Steuermittel für die Antriebsmittel des Roboterarms, dass die Produkte der Produktgruppe im aufgerichteten Zustand auf einer Ablage, bevorzugt auf einem sich senkrecht zur Förderrichtung bewegenden Kompaktierungsförderband als lückenlose, sich entlang der Förderrichtung erstreckende Reihe abgestellt werden. Ein weiterer Vorteil an der Verwendung eines Roboterarms besteht darin, dass hochpräzise und mit einer Vielzahl von Bewegungsfreiheitsgraden ausgestattete Roboterarme zu verhältnismäßig geringen Preisen zur Verfügung stehen, sodass auch die Gruppiervorrichtung entsprechend günstig hergestellt werden kann.

Gemäß einer besonders bevorzugten Ausgestaltung der Gruppiervorrichtung kann vorgesehen sein, dass die Gruppenaufnahmevorrichtung schwingungsreduziert ausgebildet ist und/oder aus einem steifen und/oder faserverstärkten Material, insbesondere einem Kohlefasermaterial, gebildet ist. Wie bereits angedeutet und wie im Weiteren noch detaillierter ausgeführt werden wird, bedarf es zur Entnahme, Aufrichtung und zum Abstellen der Produkte, insbesondere der leeren, entsprechend fragilen Produkte einer besonderen Präzision seitens der Transfermittel. Da jedoch, unabhängig von der Präzision der Ansteuerung und Bewegung der Transfermittel Schwingungen in die Transfermittel, insbesondere in die Gruppenaufnahmevorrichtung eingebracht oder induziert werden, ist es für das zuverlässige Durchführen des Gruppierverfahrens unerlässlich, dass die seitens der Transfermittel erzeugten oder erzeugbaren Schwingungen möglichst nicht oder möglichst stark gedämpft in die Gruppeaufnahmevorrichtung eingekoppelt werden, da sonst die Gefahr besteht, dass die Produkte dem Förderband nicht erfolgreich entnommen, nach der erfolgreichen Entnahme ungewollt von den Transfermitteln getrennt oder verloren oder nicht erfolgreich, also aufgerichtet und in Reihe, auf der Ablage, insbesondere auf dem Kompaktierungsförderband abgestellt werden können. Ein nicht nur schwingungsreduziertes Ausgestalten der Gruppenaufnahmevorrichtung sondern auch ein zusätzliches oder alternatives Ausbilden der Gruppenaufnahmevorrichtung durch ein steifes und/oder faserverstärktes Material, insbesondere Kohlefasermaterial hat sich als besonders vorteilhaft herausgestellt, da dadurch die Gruppenaufnahmevorrichtung mit einem relativ geringen Gewicht ausgebildet werden kann, was wiederum die Trägheit der Transfermittel positiv beeinflusst, den sicheren Einsatz der Transfermittel unterstützt und nicht zuletzt die Erzeugung und/oder die Einbringung von Schwingungen in die Transfermittel, insbesondere in die Gruppenaufnahmevorrichtung verhindert oder reduziert.

Gemäß einer weiteren besonders vorteilhaft ausgestalteten Ausführungsform der Gruppiervorrichtung kann vorgesehen sein, dass die Gruppenaufnahmevorrichtung ein Gewicht von weniger als 2000g, bevorzugt von weniger als 1500g, besonders bevorzugt von weniger als 1200g aufweist. Wie bereits beschrieben wird durch ein möglichst geringes Gewicht der Gruppenaufnahmevorrichtung in vorteilhafter Weise die Trägheit oder die Trägheitsmomente der Transfermittel positiv beeinflusst und dadurch ein sicheres und zuverlässiges Entnehmen, Aufrichten und Abstellen der Produkte oder der Produktgruppe positiv beeinflusst. Gleichermaßen ist aus Stabilitäts- und/oder Dauerfestigkeitsgründen eine gewisse Masse oder ein gewisses Gewicht der Gruppenaufnahmevorrichtung erforderlich. Dementsprechend haben sich besonders bevorzugt die oben genannten Höchstgewichte oder Höchstmassen der Gruppenaufnahmevorrichtung als vorteilhaft erwiesen, solange die Masse oder das Gewicht einen stabilen Dauerbetrieb der Gruppenaufnahmevorrichtung erlaubt. Für die Ausbildung der Gruppenaufnahmevorrichtung aus Kohlefaser, insbesondere Carbon, kann bereits ein Gewicht von etwa 1000g ausreichend sein, um einerseits möglichst geringe Trägheitsmomente zu erzeugen, andererseits jedoch eine Dauerstabilität und Dauerfestigkeit zu erreichen, bei der kein oder zumindest keine vorzeitige Ermüdung oder Verschleiß der Gruppenaufnahmevorrichtung erwartet oder befürchtet werden muss.

Eine weitere besonders bevorzugte Ausgestaltung der Gruppiervorrichtung kann vorsehen, dass die Gruppenaufnahmevorrichtung eine Länge von 100cm bis 130cm, bevorzugt 110cm bis 120cm aufweist. Eine derartige Abmessung der Gruppenaufnahmevorrichtung, insbesondere eine solche Länge der Gruppenaufnahmevorrichtung hat sich als besonders vorteilhaft herausgestellt, da dadurch sichergestellt werden kann, dass die entnommene Gruppe von Produkten oder Produktgruppe im aufgerichteten und abgestellten Zustand eine Reihe ausbildet, deren Länge annähernd einer Längsseite einer Ablagevorrichtung, insbesondere einer Palette entspricht. Damit wird erreicht, dass mit jedem Durchlaufen des Entnahmezyklus seitens der Transfermittel eine vollständige Reihe einer Lage von Produkten auf der Ablage, insbesondere auf dem Kompaktierungsförderband abgestellt wird. Dadurch wird in vorteilhafter Weise die benötigte Anzahl der Entnahmezyklen reduziert, was wiederum dazu führt, dass die Transfermittel mehr Zeit pro Entnahmevorgang haben und damit langsamer und präziser angesteuert oder gesteuert werden können, um ein bestmögliches, insbesondere fehlerfreies Entnehmen, Aufrichten und Abstellen der Produkte zu gewährleisten.

Eine weitere besonders bevorzugte Ausgestaltung der Gruppiervorrichtung kann vorsehen, dass die Gruppenaufnahmevorrichtung Haftmittel umfasst, die dazu eingerichtet sind eine bevorzugt individuelle, lösbare Verbindung mit den Produkten der Produktgruppe herzustellen und aufzulösen. Dadurch werden verschiedene vorteilhafte Wirkungen erreicht. Einerseits kann sichergestellt werden, dass jedes Produkt der Produktgruppe sicher und ausreichend gut mit den Transfermitteln verbunden ist, um dem Förderband entnommen, aufgerichtet und auf der Ablage, insbesondere auf dem Kompaktierungsförderband wieder abgestellt werden kann. Auch kann dadurch eine Rückkopplung oder ein Regelkreis implementiert werden, der die jeweils einzelne, sichere Verbindung zwischen Transfermittel, insbesondere Haftmittel und Produkt abfragt, sicherstellt und weiterverarbeitet. Außerdem kann durch die Ausbildung individueller Haftmittel der Transfermittel insbesondere der Gruppenaufnahmevorrichtung eine flexible Umrüstung der Transfermittel, insbesondere der Gruppenaufnahmevorrichtung an Produkten mit unterschiedlichen Maßen, insbesondere mit unterschiedlichen Durchmessern erreicht werden.

Besonders bevorzugt kann vorgesehen sein, dass je zwei Haftmittel zum Erzeugen einer lösbaren Verbindung mit je einem Produkt einer Produktgruppe vorgesehen sind. Dabei kann jeweils eines der zwei Haftmittel als Sicherung fungieren, falls das jeweils andere Haftmittel keine oder keine ausreichend sichere Verbindung zu dem Produkt herstellt. Außerdem kann bei der Anordnung oder dem Vorsehen von zwei Haftmitteln pro zu entnehmendem Produkt eine Anordnung der zwei Haftmittel vorgesehen sein, die der Bewegung der Transfermittel und damit der Bewegung der Produkte der Produktgruppe Rechnung trägt. Somit können beim Vorsehen von zwei oder zumindest zwei Haftmitteln pro Produkt beispielsweise Anordnungen realisiert werden, bei denen die Haftmittel so angeordnet sind, dass auf die Produkte, beispielsweise im Rahmen der Schwenkbewegung wirkende Kräfte, insbesondere Beschleunigungen, optimal abgeleitet oder aufgegriffen werden. Dies bedeutet, dass durch ein Vorsehen von zumindest zwei Haftmitteln pro Produkt und einer entsprechend bevorzugter Anordnung der Haftmittel zueinander und zum entsprechenden Produkt eine sichere Handhabung des Produkts zwischen Entnahme von dem Förderband und Abstellen auf dem Kompaktierungsförderband sichergestellt werden kann. Vorteilhaft kann also vorgesehen sein, dass die Haftmittel entlang so angeordnet sind, dass bei der Entnahme der Produkte und/oder während der Verbindung zwischen den Haftmitteln und der Produkte die Haftmittel entlang der Längsachse der Produkte ausgerichtet sind.

Eine weitere besonders vorteilhafte Ausgestaltung der Gruppiervorrichtung kann vorsehen, dass die Gruppenaufnahmevorrichtung über die Länge, insbesondere über die gesamte Länge verteilt eine Vielzahl von vordefinierten Befestigungsstellen zur Befestigung der Haftmittel aufweist. Dadurch wird ein besonders vorteilhafter Aspekt der Gruppiervorrichtung realisiert. Denn durch das Vorsehen entsprechend vieler vordefinierter Befestigungsstellen kann in einfacher Weise eine Anpassung der Transfermittel an unterschiedliche Produkte, insbesondere an Produkte mit unterschiedlichen Durchmessern, erreicht werden. Demnach ist es zur Umrüstung der Transfermittel auf ein Produkt einer anderen Größe, insbesondere eines anderen Durchmessers im Wesentlichen erforderlich die vorgesehenen Haftmittel an jeweils dem Produkt oder dem Durchmesser des Produkts zugeordneten Befestigungsstellen der Gruppenaufnahmevorrichtung zu verbringen und dort dazu befestigen. Damit kann eine Umrüstung der Transfermittel mit sehr kleinem Aufwand und damit sehr schnell erfolgen.

Gemäß einer ebenfalls besonders bevorzugten Ausgestaltung der Gruppiervorrichtung kann zudem vorgesehen sein, dass die Haftmittel in Längsrichtung der Gruppenaufnahmevorrichtung einen Abstand aufweisen, der dem Abstand der Längsachsen der Produkte auf dem Förderband, insbesondere dem Durchmesser der Produkte, entspricht. Die vorliegende Ausführungsform gewährleistet, insbesondere bei einer wortwörtlich lückenlosen Anlieferung der Produkte auf dem Förderband, dass die Haftmittel der Gruppenaufnahmevorrichtung an den jeweiligen Produkten an jeweils entsprechenden Punkten oder Stellen zur Anlage kommen und dort ggf. eine Befestigung der Produkte bewirken. Dementsprechend kann beispielsweise realisiert werden, dass die Haftmittel so angeordnet und beabstandet sind, dass bei einer korrekten Ansteuerung der Transfermittel die Kontaktierung zwischen Haftmittel und Produkt und die Befestigung zwischen Haftmittel und Produkt an einer Stelle oder einem Punkt des Produkts, ggf. an zwei oder mehreren Stellen oder Punkten des Produkts, erfolgt, die senkrecht über der Längsachse, insbesondere senkrecht über der Mittelsymmetrieachse des Produkts angeordnet sind. Dadurch werden in besonders vorteilhafter Weise, selbst bei entsprechend gekrümmten, bevorzugt zylindrisch gekrümmten Oberflächen der Produkte oder Mantelflächen der Produkte Punkte oder Stellen der Produkte gewählt, welche einerseits die Drehmomente auf die zu entnehmenden Produkte im Rahmen der Entnahme, Aufrichtung und des Abstellens minimieren und die darüber hinaus ein gleichmäßiges, insbesondere symmetrisches Anordnen und Kontaktieren der Haftmittel und eine entsprechende Ausbildung einer Verbindung zwischen Haftmittel und Produkt ermöglichen.

Eine weitere besonders bevorzugte Ausführungsform der Gruppiervorrichtung kann vorsehen, dass diese Vakuummittel, insbesondere zum Erzeugen eines eine Verbindung zwischen den Produkten und den Haftmitteln bewirkenden Unterdruck aufweist. Bevorzugt können die Haftmittel als Saugnäpfe ausgebildet sein, die mit einer Saugöffnung oder einem Saugkanal mit entsprechenden Verbindungsmitteln mit den Vakuummitteln kommunizieren, sodass wenn die als Saugnäpfe ausgebildeten Haftmittel an der Oberfläche oder der Mantelfläche der Produkte zur Anlage kommen und zumindest mittelbar über die Vakuummittel mit einem sich zwischen der Oberfläche der Saugnäpfe und der Mantelfläche des Produkts ausbildenden Unterdrucks mit den Produkten verbinden oder an den Produkten befestigen eine sichere Entnahme der Produkte sowie eine auch ansonsten sichere Handhabung der Produkte gewährleistet wird. Außerdem hat das entsprechende Vorsehen von Vakuummitteln zur Erzeugung eines die Verbindung bewirkenden Unterdrucks den Vorteil, dass die Vakuummittel und somit der Unterdruck schnell und kurzfristig abgeschaltet oder aufgehoben werden kann, sodass auch kurzfristig das Lösen der Verbindung zwischen Haftmittel und Produkt sichergestellt ist, wodurch wiederum ein zuverlässiges Abstellen der Produkte auf dem Kompaktierungsförderband gewährleistet wird.

Gemäß einer weiteren bevorzugten Ausführung der Gruppiervorrichtung kann vorgesehen sein, dass die Gruppiervorrichtung signalleitend mit den Steuermitteln verbundene Sensormittel zur Detektion der Position des Förderbandes sowie zur Detektion der Transfermittel, insbesondere der Gruppenaufnahmevorrichtung umfasst. Weiter kann besonders vorteilhaft vorgesehen sein, dass die Gruppenvorrichtung signalleitend mit den Steuermitteln verbundene Sensormittel zur Detektion der Position und der Geschwindigkeit des Förderbandes sowie zur Positions- und/oder Geschwindigkeitsbestimmung des Kompaktierungsförderbandes aufweist. Dadurch kann sichergestellt werden, dass die von den Transfermitteln ausgeführte Bewegung zur Entnahme, Aufrichtung und zum Abstellen der Gruppe von Produkten oder Produktgruppen optimal auf die Bewegungszustände des Förderbandes und des Kompaktierungsförderbandes abgestimmt wird. Dadurch wird ein erfolgreiches Entnehmen, Aufrichten und Abstellen der Produktgruppen sichergestellt. Als Sensormittel können grundsätzlich verschiedenste Vorrichtungen zum Einsatz kommen, welche auf verschiedenen physikalischen Mess- und/oder Detektionsmechanismen basieren. Beispielsweise können mechanische Sensormittel, beispielsweise Relativ- und/oder Absolutpositionsgeber Verwendung finden. Außerdem können optische Sensormittel, beispielsweise optische Erfassungsmittel, bevorzugt in Verbindung mit einer computergestützten optischen Auswertung der von den Sensormitteln erzeugten Abbildungen, zum Einsatz kommen. Auch magnetische oder sonstige Sensormittel können bei der Detektion der Position und/oder Geschwindigkeit des Förderbands sowie zur Detektion des Zustands der Transfermittel, insbesondere der Gruppenaufnahmevorrichtung und/oder der Haftmittel zum Einsatz kommen.

Bezüglich des Systems wird die oben genannte Aufgabe dadurch gelöst, dass ein erfindungsgemäßes System eine Gruppiervorrichtung nach einer der vorangehend beschriebenen Ausführungsform sowie eine Herstelleinrichtung zum Herstellen der zu gruppierenden Produkte und zum Versorgen der anliefernden Fördereinrichtung mit den Produkten umfasst. Erfindungsgemäß wird dadurch ein System geschaffen, bei der mit kleinstem Platzbedarf eine hochgradig flexible Möglichkeit zum Gruppieren, insbesondere zum Palettieren oder Vorpalettieren von Produkten geschaffen wird, welche sich jedoch nicht an einem einzelnen Produkt oder einer einzelnen Produktgruppe orientiert, sondern unter verhältnismäßig geringem Aufwand vorrichtungsseitig und verfahrensseitig an unterschiedliche Produkte, insbesondere Produkte mit unterschiedlichem Durchmesser, anpassen lässt.

Gemäß einer vorteilhaften Ausgestaltung des Systems kann vorgesehen sein, dass das System ein Ablagesystem zum Aufnehmen einer Lage von aufgestellten und kompaktieren Produkten von der Ablage, insbesondere dem Kompaktierförderband und zum Ablegen der Lage von Produkten auf einer Ablagevorrichtung, insbesondere auf einer Palette, umfasst. Dadurch wird das System vorteilhaft insoweit ergänzt oder weitergebildet, dass die auf der Ablage abgelegt oder auf dem Kompaktierförderband gegen dessen Anschlag anstehende oder anlaufende Lage von aufgerichteten und ggf. ausgerichteten Produkten von der Ablage, insbesondere dem Kompaktierförderband entnommen, und ggf. nach einer entsprechenden Vorverpackung der Lage, auf einer Ablagevorrichtung, insbesondere auf einer Palette abgelegt werden kann.

Weitere Vorteile, Merkmale und Einzelheiten der Erfindung ergeben sich aus der nachfolgenden Beschreibung der anhand schematischer Zeichnungen beschriebener Ausführungsbeispiele.

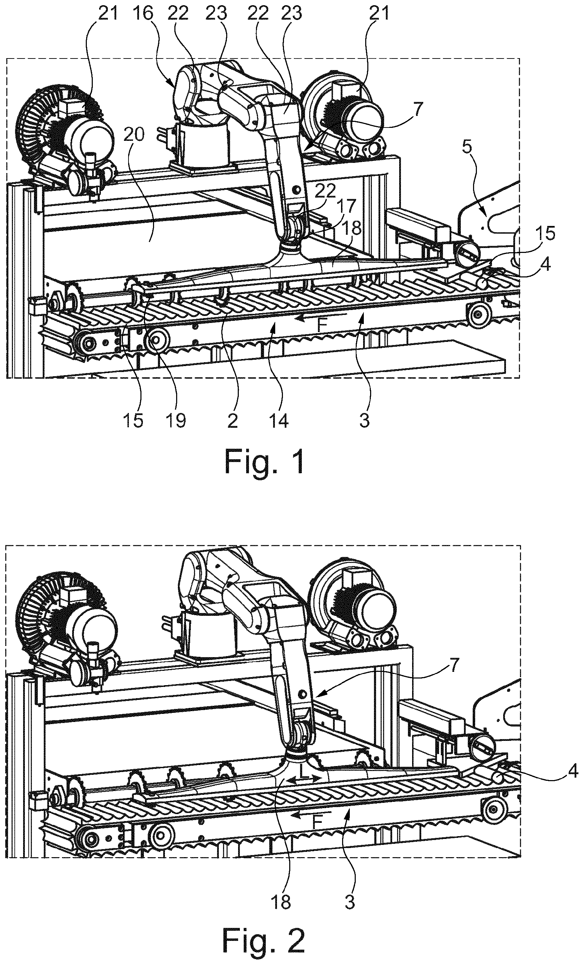

Diese zeigen in den
- Fig. 1 bis Fig. 16:: unterschiedliche Betriebszustände eines erfindungsgemäßen Gruppierverfahrens sowie einer erfindungsgemäßen Gruppiervorrichtung.

In den Figuren sind gleiche Elemente und Elemente mit der gleichen Funktion mit den gleichen Bezugszeichen gekennzeichnet.

Im Folgenden wird anhand der Fig. 1 zunächst der grundsätzliche Aufbau einer nach dem Konzept der Erfindung ausgebildeten Gruppiervorrichtung 1 erläutert, wobei dann im Rahmen der Erklärung der folgenden Figuren im Wesentlichen auf die Zustandsveränderungen im Rahmen der unterschiedlichen Betriebszustände eingegangen wird, die den Ablauf des erfindungsgemäßen Verfahrens charakterisieren. Der grundsätzliche Aufbau oder die grundsätzliche Zusammensetzung der Vorrichtung auf gegenständlicher Ebene bleibt dabei im Wesentlichen gleich. Dies bedeutet sämtliche Figuren zeigen, soweit nicht anders beschrieben, dieselbe Vorrichtung.

Die Gruppiervorrichtung 1 weist ein Taschenband 14 auf, welches eine Vielzahl von hintereinander angeordneten Taschen 2 umfasst, welche zur Aufnahme jeweils eines Produkts in Form einer leeren Dose, einer leeren Tube oder einer leeren Kartusche dient. Das Taschenband 14 bildet ein Förderband 3 aus, welches mit an sich bekannten, aus Übersichtlichkeitsgründen nicht dargestellten Antriebsmitteln, beispielsweise in Form mindestens eines Servomotors, antreibbar ist, wobei eine in der Fig. 1 gezeigte Oberseite 15, die als Beladeseite ausgebildet ist mit einer durch die Antriebsmittel vorgegebenen Geschwindigkeit entlang einer hier beispielhaft und bevorzugt horizontalen, gradlinigen Förderstrecke S in einer Förderrichtung F angetrieben wird. Dabei ist in der Fig. 1 dargestellt, dass das Taschenband 14 des Förderbandes 3 als umlaufendes Taschenband 14 ausgestaltet ist. Auf das Förderband 3 werden lückenlos, d.h. ohne Taschen 2 des Taschenbandes 14 freizulassen, Produkte 4 nacheinander unmittelbar von einer anliefernden Fördereinrichtung 5 abgelegt. Aus Gründen der Übersichtlichkeit ist in der Fig. 1 lediglich ein einzelnes Produkt 4 dargestellt. Auf dem Förderband 3 wird mittels eines Ausrichteanschlags 15 sichergestellt, dass die Produkte 4 allesamt bündig oder gleichmäßig in den Taschen 2 des Taschenbandes 14 angeordnet sind.

Die Gruppiervorrichtung 1 umfasst weiter Transfermittel 7, welche im Beispiel der dargestellten Ausführungsform einen Roboterarm 16 sowie eine an einem freien Ende 17 des Roboterarms 16 angeordnete Gruppenaufnahmevorrichtung 18 umfassen. Mit der Gruppenaufnahmevorrichtung 18 verbunden oder an der Gruppenaufnahmevorrichtung 18 angeordnet sind eine Mehrzahl von Haftmitteln 19, wobei aus Übersichtlichkeitsgründen in der Darstellung der Fig. 1 lediglich die Haftmittel am äußeren Ende oder an den längsseitigen Enden der Gruppenaufnahmevorrichtung 18 abgebildet sind. Wie in der Fig. 1 dargestellt, sind die Haftmittel 19 jeweils paarweise senkrecht zur Förderrichtung F des Taschenbandes 14 des Förderbandes 3 angeordnet. In Längsrichtung sind die Haftmittel 19, auch die in der Fig. 1 nicht dargestellten Haftmittel 19 bevorzugt gleich weit voneinander beabstandet, wie die jeweiligen Taschen 2 des Taschenbandes 14. Dadurch kann erreicht werden, dass über die in der Fig. 1 nicht dargestellten Antriebsmittel und Steuermittel für die Antriebsmittel zum Antrieb der Transfermittel 7 bei einer synchronen Bewegung der Transfermittel 7, insbesondere der Gruppenaufnahmevorrichtung 18 zu der Beförderung der Produkte 4 entlang der Förderstrecke S in Förderrichtung F, insbesondere, wenn eine Längsachse der Gruppenaufnahmevorrichtung 18 bei der synchronen Bewegung oder Mitbewegung der Gruppenaufnahmevorrichtung 18 parallel zur Förderrichtung F verläuft und parallel gehalten wird, die Haftmittel 19 der Transfermittel 7 während der synchronen Bewegung jeweils zentrisch oberhalb eines entsprechenden Produkts 4 angeordnet sind oder angeordnet werden.

Die **Fig. 1** zeigt ebenfalls ein von der Gruppiervorrichtung umfasstes Kompaktierförderband 20, auf welches die Produkte 4 abgestellt werden können, wenn sie von dem Taschenband 14 des Förderbands 3 entnommen und aufgerichtet wurden. Das Entnehmen der Produkte 4, das Aufrichten der Produkte 4 und das Abstellen der Produkte 4 auf dem Kompaktierförderband 20 wird über die Transfermittel 7, insbesondere über den Roboterarm 16 und die an dem freien Ende 17 des Roboterarms 16 angeordnete Gruppenaufnahmevorrichtung 18 gewährleistet. Das Kompaktierförderband 20 entspricht in einer Breite B im Wesentlichen der Breite einer Ablagevorrichtung, beispielsweise einer Seitenlänge einer Palette.

Das Kompaktierförderband 20 umfasst zudem einen in der Fig. 1 nicht dargestellten Anschlag, sodass Produkte 4, insbesondere aufgerichtete lückenlose Reihen von Produkten 4 durch das Kompaktierförderband 20 von dem Förderband 3 weg transportiert werden und entweder auf den nicht dargestellten Anschlag auflaufen oder aber auf bereits auf dem Förderband 3 befindliche Reihen von aufgerichteten Produkten 4 auflaufen oder anschlagen. Von dem Kompaktierförderband 20 können so erzeugte Lagen von Produkten 4, insbesondere aufgerichtete lückenlose Lagen von Produkten 4 entnommen ggf. vorverpackt und einer Ablagevorrichtung, beispielsweise einer Palette zugeführt werden.

Die Gruppenaufnahmevorrichtung 18 der Transfermittel 7 kann bevorzugt aus einem steifen und/oder schwingungsreduzierten und/oder faserverstärktem Material, beispielsweise aus Kohlefaser gefertigt sein, um damit die bei der Bewegung der Gruppenaufnahmevorrichtung 18 entstehenden Trägheitsmomente sowie die eingekoppelten Schwingungen zu minimieren. Die Gruppenaufnahmevorrichtung 18 kann entlang ihrer Längsachse L eine Länge 100cm bis 130cm, bevorzugt von 110cm bis 120cm aufweisen. Außerdem kann die Gruppenaufnahmevorrichtung 18 bevorzugt ein Gewicht von weniger als 1200g aufweisen. In der Fig. 1 sind ebenfalls der Gruppiervorrichtung 1 zugeordnete Vakuummittel 21 dargestellt, welche in Wirkverbindung mit den Haftmitteln 19 der Gruppenaufnahmevorrichtung 18 stehen, und somit ermöglichen, dass seitens der Haftmittel 7 bei einer Kontaktierung oder Anlage der Haftmittel 19 auf den Produkten 4 ein Unterdruck zwischen den Haftmitteln 19 und den Produkten 4 erzeugt wird, sodass eine lösbare Verbindung zwischen den Produkten 4 und den Haftmitteln 19, zumindest zeitweise erzeugt wird.

Um eine möglichst freie und gleichzeitig möglichst präzise Bewegung der Haftmittel 19 der Gruppenaufnahmevorrichtung 18 der Transfermittel 7 zu ermöglichen, umfasst der Roboterarm 16 eine Mehrzahl von über Gelenke 22 miteinander verbundene Gelenkarme 23. Über die Gelenke 22 und die Gelenkarme 23 wird eine hohe Anzahl an Freiheitsgraden bezüglich der Bewegung der Transfermittel 7, insbesondere bezüglich der Bewegung der Gruppenaufnahmevorrichtung 18 gewährleistet. Diese werden genutzt, um, wie nachfolgend beschrieben werden wird, auf geringstem Raum und weitestgehend unabhängig von der jeweiligen Ausgestaltung der Produkte 4, insbesondere unabhängig von den Durchmessern der Produkte 4 das Entnehmen, Aufrichten und Abstellen allen angelieferten Produkten in lückenlosen Produktgruppen zu gewährleisten.

Bezüglich der Umstellung der Gruppiervorrichtung 1 auf Produkte 4 mit unterschiedlichen Durchmessern ist lediglich das Taschenband 14 des Förderbandes 3 zu wechseln, um einen entsprechenden Abstand oder Durchmesser der Taschen 2 zu gewährleisten, der an die Produkte 4 angepasst ist. Gleichzeitig kann notwendig sein die Gruppenaufnahmevorrichtung 18 zu wechseln, um eine Gruppenaufnahmevorrichtung 18 bereitzustellen, die an die Produkte 4 angepasst ist. Beispielsweise können dazu unterschiedliche Gruppenaufnahmevorrichtungen 18 mit unterschiedlich positionierten Haftmitteln 19 vorgesehen werden, die lediglich ausgetauscht werden müssen. Alternativ kann auch mit einer Gruppenaufnahmevorrichtung 18 eine Umrüstung auf Produkte 4 mit einem anderen Durchmesser stattfinden. Beispielsweise kann die Gruppenaufnahmevorrichtung 18 eine Lochplatte aufweisen, deren Löcher als vordefinierte Befestigungsstellen zur Befestigung der Haftmittel 19 dienen. In diesem Fall ist es beispielsweise möglich, dass durch eine neue oder veränderte Anordnung der Haftmittel 19 an verschiedenen vordefinierten Befestigungsstellen oder Löchern einer Lochplatte eine Anpassung der Gruppenaufnahmevorrichtung 18 an Produkte 4 mit einem geänderten Durchmesser ermöglicht wird.

In **Fig. 2** befinden sich die Transfermittel 7 in einer Anfangsposition. Ausgehend von dieser Anfangsposition werden zur Entnahme der lückenlosen Gruppe von Produkten 4 die Transfermittel 7 synchron mit dem Förderband 3 und den darauf geförderten, zu entnehmenden Produkten 4 der Produktgruppe entlang der Förderstrecke S verstellt oder verfahren, wobei zudem besonders bevorzugt bei dem synchronen Verstellen oder Verfahren die Längsachse L der Gruppenaufnahmevorrichtung 18 parallel zur Förderrichtung F des Förderbands 3 gehalten wird.

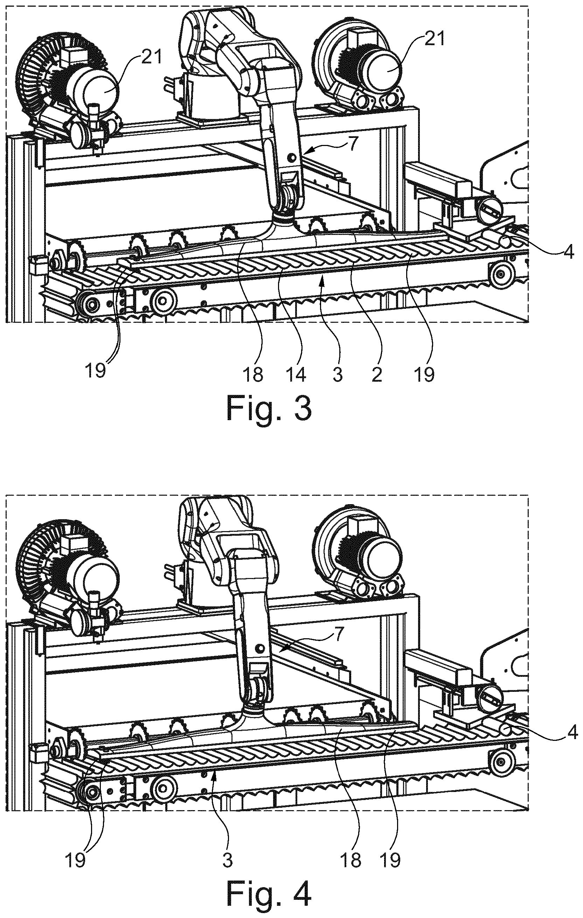

In der **Fig. 3** ist ein Teil der Strecke zwischen Anfangsposition und Entnahmeposition, auf welcher die Transfermittel 7, insbesondere die Gruppenaufnahmevorrichtung 18 synchron mit den Taschen 2 des Taschenbandes 14 des Förderbandes 3 verstellt werden bereits zurückgelegt. Für eine Produktgruppe von Produkten 4, welche in der Figur nicht dargestellt sind, wird in diesem Abschnitt der Strecke zwischen Anfangsposition und Entnahmeposition über die Vakuummittel 21 seitens der Haftmittel 19 ein Unterdruck zwischen den Haftmitteln 19 und der Produkte 4 erzeugt, was zu einem Ansaugen der Produkte 4 führt und eine lösbare Verbindung zwischen den Haftmitteln 19 der Transfermittel 7 und den Produkten 4 herstellt.

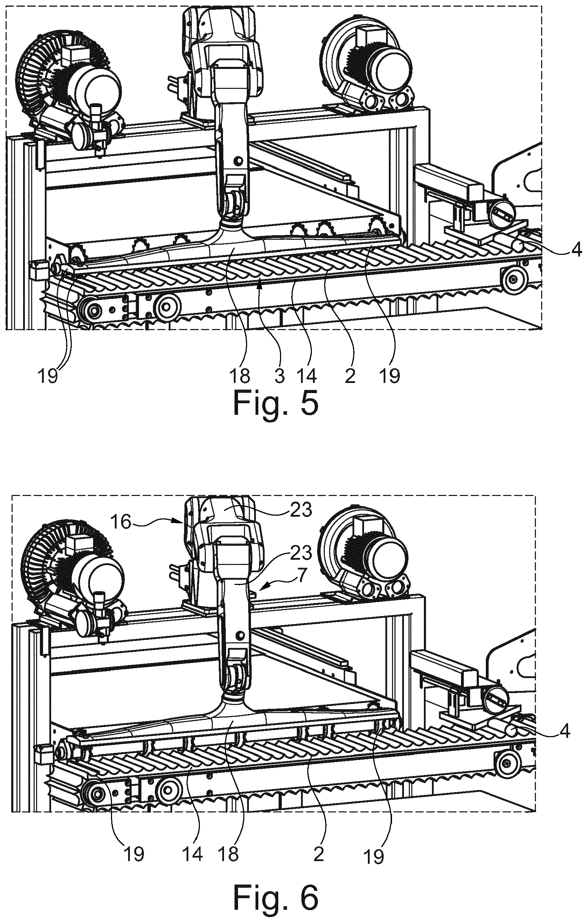

In der Darstellung der **Fig. 4** sind die Transfermittel 7, insbesondere die Gruppenaufnahmevorrichtung 18 abermals ein Stück entlang der Förderrichtung F von der Anfangsposition in Richtung der Entnahmeposition synchron mit den Produkten 4 auf dem Förderband 3 verfahren oder verstellt worden, wobei die weitere Strecke, bezogen auf die Darstellung der Fig. 3, genutzt wurde, um seitens der Haftmittel 19 eine lösbare Verbindung zwischen den Transfermitteln 7, insbesondere zwischen den Haftmitteln 19 und den Produkten 4 herzustellen. Bis hin zu der Darstellung der **Fig. 5** wird der Unterdruck zwischen Haftmittel 19 und Produkten 4 weiter aufgebaut, wobei weiterhin sichergestellt wird, dass sich die Längsachse der Gruppenaufnahmevorrichtung 18 parallel zur Förderrichtung F des Förderbandes 3 synchron mit den in den Taschen 2 des Taschenbandes 14 befindlichen Produkten 4 mitbewegt oder mitverfährt.

In der **Fig. 6** ist schließlich ein Zustand des Gruppierverfahrens erreicht, indem die Transfermittel 7, insbesondere nach dem Aufbau eines ausreichenden Unterdrucks zur Verbindung zwischen den Produkten 4 und den Haftmitteln 19, die Produkte 4 einer lückenlos zusammenhängenden Produktgruppe von dem Förderband 3 entnehmen, indem, durch eine entsprechende Verstellung der Gelenkarme 23 des Roboterarms 16 die Gruppenaufnahmevorrichtung 18 angehoben wird und dementsprechend die Produkte 4 zusammen mit der Gruppenaufnahmevorrichtung 18 anhebt. Dies bedeutet auch, dass in einem Moment, in dem die Produkte 4 aus den Taschen 2 des Taschenbandes 14 vollständig entnommen sind und damit auch die Synchronität zwischen den Transfermitteln 7, insbesondere zwischen den Haftmitteln 19 der Transfermittel 7 und den Produkten 4 und/oder dem Förderband nicht weiter erforderlich ist, die Entnahmeposition erreicht ist, die beispielsweise in der Fig. 5 dargestellt ist oder aber in einer Zwischenposition zwischen der Fig. 5 und der Fig.6 liegt.

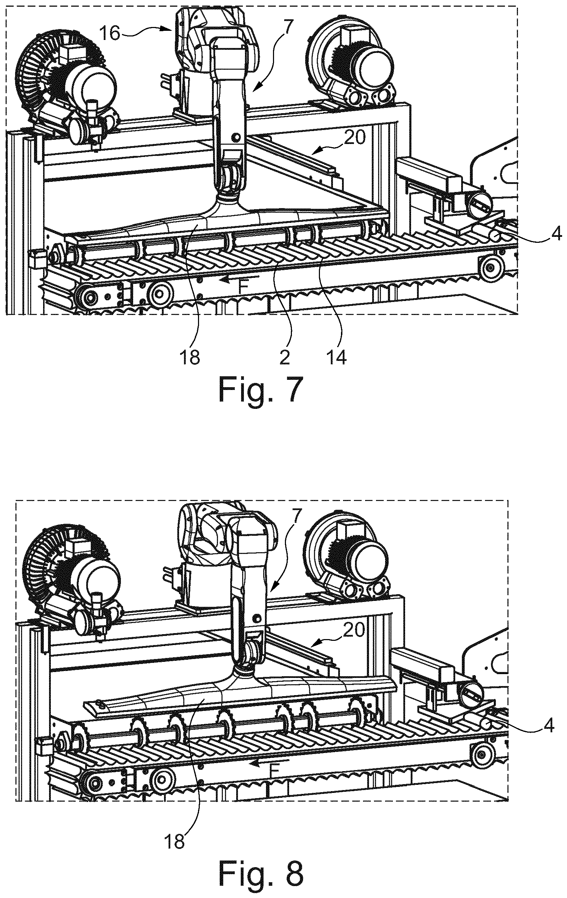

Nachdem die Produkte 4 einer lückenlosen Aneinanderreihung von Produkten 4 in dem Verfahrensabschnitt des Gruppierverfahrens, wie in der Fig. 6 skizziert ist, angehoben und aus dem Förderband 3, insbesondere aus den Taschen 2 des Taschenbandes 14, entnommen wurden, folgt in einem in der **Fig. 7** dargestellten Verfahrensschritt des Gruppierverfahrens ein Verfahren der Transfermittel 7 sowie der lösbar an den Transfermitteln 7 angeordneten Produkten 4 zu einer Transferposition der Transfermittel 7. Dies kann beispielsweise dadurch erfolgen, dass die Gruppenaufnahmevorrichtung 18 durch den Roboterarm 16 weiter angehoben wird und zudem gleichzeitig entgegen der Förderrichtung F verfahren wird, beispielsweise bis die Gruppenaufnahmevorrichtung 18 eine Höhe gegenüber dem Förderband 3 und dem Kompaktierförderband 20 erreicht hat, die ausreichend ist, um die an der Gruppenaufnahmevorrichtung 18 angeordneten oder angehefteten Produkte 4 sicher verkippen oder aufrichten zu können und gleichzeitig die Gruppenaufnahmevorrichtung 18 mittig bezüglich der Breite B des Kompaktierförderbandes 20 angeordnet ist.

Im vorliegenden Beispiel wird die ausreichende Höhe zum Beginn des Aufrichtevorgangs oder des Schwenkvorgangs der Produkte 4 der Produktgruppe bereits vor dem Erreichen der mittig bezüglich des Kompaktierförderbandes 20 angeordneten Transferpositionen der Transfermittel 7 erreicht. Dementsprechend wird, wie in **Fig. 8** zu erkennen ist, auch bereits vor dem Erreichen der entsprechenden Transferposition das Aufrichten oder das Schwenken der Produkte 4 der Produktgruppe eingeleitet. Entsprechend ist in der Fig. 8 zu erkennen, dass über eine Verstellung eines Gelenks 22 des Roboterarms 16 die Gruppenaufnahmevorrichtung 18 so verschwenkt wird, dass die an der Gruppenaufnahmevorrichtung 18 befestigten oder angehafteten Produkte 4 senkrecht zur Förderrichtung F verschwenkt und damit aufgerichtet werden.

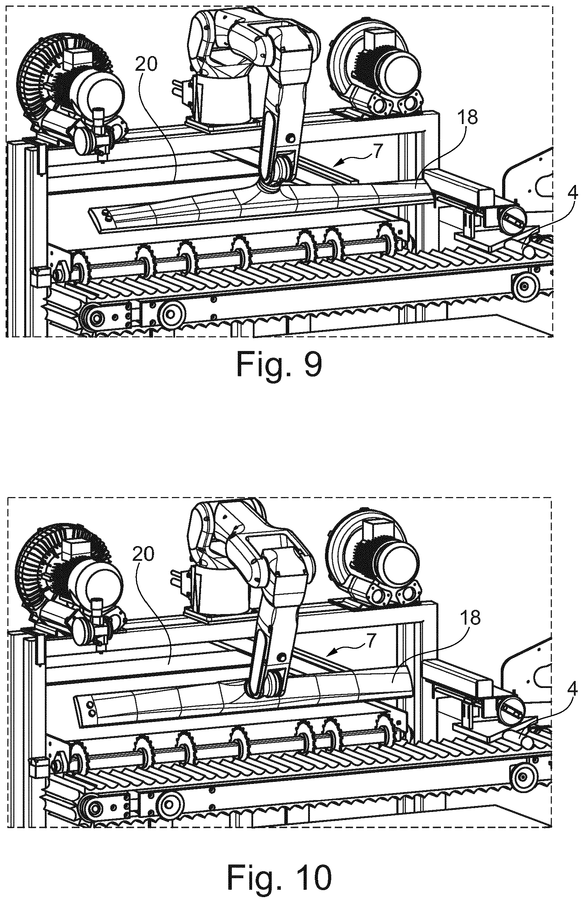

In der Darstellung der **Fig. 9** ist der besagte Schwenkvorgang oder die besagte Schwenkbewegung der Transfermittel 7, insbesondere die Schwenkbewegung der Gruppenaufnahmevorrichtung 18 der Transfermittel 7 zwar noch nicht vollständig abgeschlossen, was bedeutet, dass die Produkte noch nicht vollständig oder noch nicht um 90° verschwenkt oder aufgerichtet wurden, gleichzeitig ist jedoch die Transferposition, welche eine mittige Ausrichtung der Gruppenaufnahmevorrichtung 18 bezüglich der Breite des Kompaktierförderbandes 20 darstellt von der Gruppenaufnahmevorrichtung 18 erreicht worden, sodass bei einem Übergang der Situation von der Fig. 9 zur Fig. 10 einerseits die Schwenkbewegung der Produkte 4 der Produktgruppe über eine Schwenkbewegung der Transfermittel 7 weiter ausgeführt wird, zudem jedoch eine Bewegungskomponente der Transfermittel 7 hinzutritt, welche eine Überführung der Transfermittel 7, insbesondere der Gruppenaufnahmevorrichtung 18 von der Transferposition hin zu einer Ablageposition der Gruppenaufnahmevorrichtung 18 bewirkt. Diese Bewegungskomponente zeichnet sich durch ein abermaliges Absenken der Gruppenaufnahmevorrichtung 18 sowie durch eine Translationsbewegung der Gruppenaufnahmevorrichtung 18 in Richtung des Kompaktierförderbandes 20 aus.

In der Darstellung der **Fig. 10** ist die Schwenkbewegung der Produkte 4, insbesondere die Schwenkbewegung um 90° zur Aufrichtung der Längsmittelachsen der Produkte 4 aus einer horizontalen Ausrichtung in einer vertikale Ausrichtung fast abgeschlossen. Außerdem nähern sich die Transfermittel 7, insbesondere die Gruppenaufnahmevorrichtung 18 der Ablageposition, indem die Gruppenaufnahmevorrichtung 18 weiter abgesenkt und in Richtung der Kompaktierförderbandes 20 verfahren wird.

Um ein gleichmäßiges und gleichzeitiges Absetzen aller mit den Transfermitteln 7 zeitweise verbundener Produkte 4 zu gewährleisten, wird bei den Verfahrensschritten des Gruppierverfahren gemäß den Fig. 9 und 10 und insbesondere auch in den Verfahrenssituationen der Fig. 11 und 12 besonders darauf geachtet, dass sich die Längsachse L der Gruppenaufnahmevorrichtung 18 parallel zu der Oberfläche des Kompaktierförderbandes 20 ausgerichtet ist und ausgerichtet bleibt.

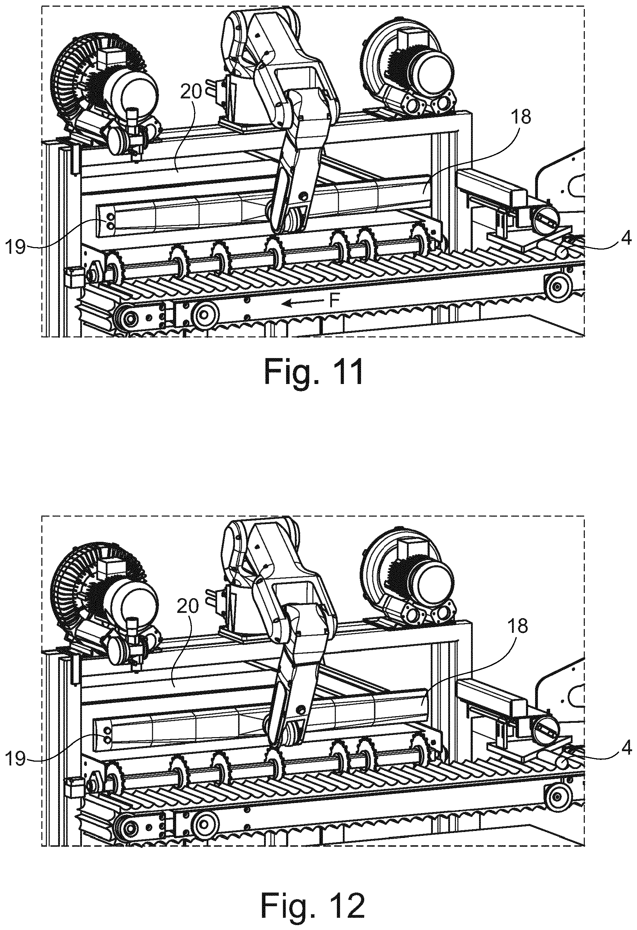

In der Darstellung der **Fig. 11** ist die Schwenkbewegung oder das Aufrichten der Produkte 4 aus einem liegenden in einen stehenden Zustand oder aus einer Ausrichtung mit einer horizontalen Längsmittelachse hin zu einer Ausrichtung mit einer vertikalen Längsmittelachse abgeschlossen. Bei dem Übergang zwischen der Verfahrenssituation der Fig. 11 und der **Fig. 12** kann ggf. noch ein weiteres minimales Absenken der Gruppenaufnahmevorrichtung 18 sowie ggf. ein Verfahren der Gruppenaufnahmevorrichtung 18 in Richtung des Kompaktierförderbandes 20 vorgesehen sein, die so dimensioniert sind, dass die aufgerichteten Produkte 4 das Kompaktierförderband 20 bereits berühren oder unmittelbar über der Oberfläche des Kompaktierförderbandes 20 angeordnet sind. Im Verfahrenszustand oder im Verfahrensschritt der Fig. 12 kann schließlich der Unterdruck zwischen den Haftmitteln 19 und den Produkten 4 aufgehoben werden, wodurch die Produkte 4 im aufgerichteten Zustand auf dem sich senkrecht zur Förderrichtung F bewegenden Komapaktierförderband 20 als lückenlose, sich entlang der Förderrichtung F erstreckende Reihe von Produkten 4 abgestellt und vom Kompaktierförderband 20 als solche Reihe in Richtung eines Anschlags des Kompaktierförderbands 20 abtransportiert werden.

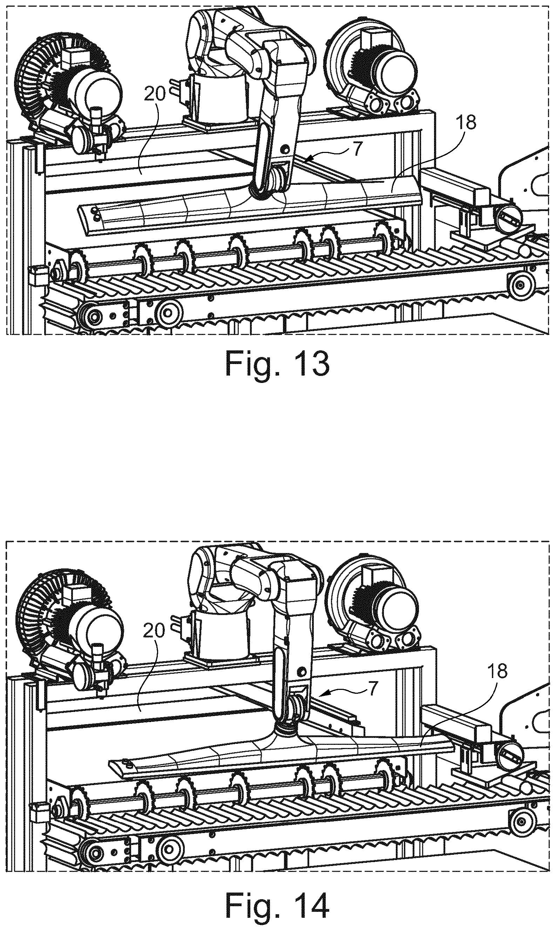

In den **Fig. 13 und 14** werden die Transfermittel 7, insbesondere die Gruppenaufnahmevorrichtung 18 über die Transferposition zurück zur Anfangsposition überführt. Während der Überführung der Transfermittel 7 zurück zur Anfangsposition werden die auf dem Kompaktierförderband 20 als lückenlose Reihe abgestellte Gruppe von aufgerichteten Produkten 4 mittels dem Kompaktierförderband 20 abtransportiert und entweder gegen den Anschlag gefahren oder gegen eine bereits auf dem Kompaktierförderband 20 befindliche zuvor dort abgestellte und aufgelaufene Reihe von aufgerichteten Produkten 4 aufgefahren.

Insgesamt sei an dieser Stelle noch erwähnt, dass sich das Förderband 3 während des gesamten Verfahrens, also insbesondere auch während der Entnahme der Produktgruppe der Produkte 4 aus den Taschen 2 des Förderbands 3 mit einer insbesondere konstanten Fördergeschwindigkeit weiterbewegt und dementsprechend auf die leeren Taschen 2, aus denen, beispielsweise in der Situation zwischen Fig. 5 und Fig. 6 die Produkte 4 entnommen werden wiederum ohne eine weitere Lücke oder sonstige leeren Taschen 2 Produkte 4 folgen, die abermals mit dem Förderband 3 in Förderrichtung F transportiert werden. Dies bedeutet auch, dass das Verfahren beim abermaligen Erreichen der Anfangsposition mit den Transfermittel 7 die in dieser Zeit geförderten Produkte 4 gerade soweit in Förderrichtung F transportiert werden, dass beim abermaligen Aufnehmen der Synchronfahrt zwischen den Transfermitteln 7, insbesondere der Gruppenaufnahmevorrichtung 18 und dem Förderband 3, keines der zwischenzeitlich geförderten Produkte 4 in Förderrichtung F über die Gruppenaufnahmevorrichtung 18 oder die am weitesten außen auf der Gruppenaufnahmevorrichtung 18 angeordneten Haftmittel 19 heraus- oder hinweggefördert wurde. Denn in diesem Fall würde die abermalige Aufnahme der Synchronfahrt oder des synchronen Verfahrens dazu führen, dass zumindest ein Produkt auf dem Förderband 3 in einer entsprechenden Tasche 2 verbleiben und nicht entnommen, aufgerichtet und abgestellt werden würde.

Um dies zu verhindern ist vorteilhaft vorgesehen, dass die Zeitspanne die vergeht, bevor ein abermaliges Anfahren der Anfangsposition 24 seitens der Transfermittel 7 realisiert wird kleiner ist, als das Verhältnis des Abstands zwischen den Längsachsen der äußeren Produkte 4 der Produktgruppe und der Fördergeschwindigkeit des Förderbandes in Förderrichtung F. Besonders bevorzugt können die Transfermittel 7, insbesondere die Gruppenaufnahmevorrichtung 18 zwei aufeinanderfolgende Positionierungen an der Anfangsposition 24 in weniger als 10s, bevorzugt in weniger als 8s, besonders bevorzugt in weniger 6s erreichen.

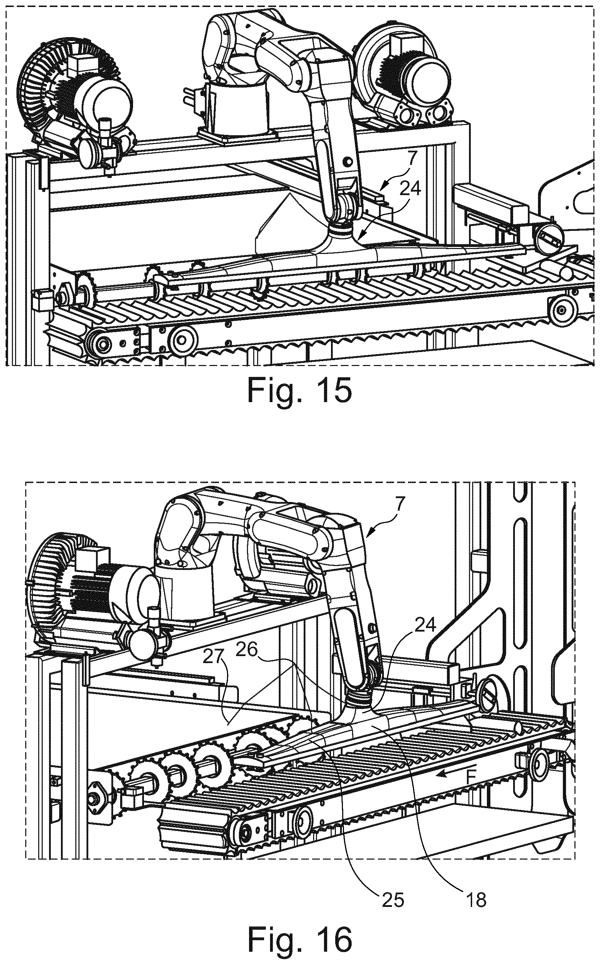

In den **Fig. 14** **und** **15** wird gezeigt, wie die Transfermittel 7 zunächst in die Transferposition und dann zurück zur Anfangsposition 24 überführt werden, wo dann der nächste Entnahmezyklus zum Entnehmen, Aufrichten und Ablegen einer Produktgruppe startet, ohne dass Produkte 4 auf dem Förderband 3, insbesondere in den Taschen 2 verbleiben.

In der **Fig. 16** ist der Verfahrweg der Transfermittel 7, insbesondere der Gruppenaufnahmevorrichtung 18 nochmals eingezeichnet. Ausgehend von der Anfangsposition 24 wird eine synchrone Fahrt in Richtung der Förderrichtung F bis hin zu einer Entnahmeposition vollführt. An der Entnahmeposition wird das synchrone Verstellen der Transfermittel 7 beendet und die dann bereits mit den Transfermitteln 7 lösbar verbundenen Produkte 4 der Produktgruppe angehoben und eine Anhebeposition 25 seitens der Transfermittel 7 angefahren. Ausgehend von der Anhebeposition 25 wird die Transferposition 26 angefahren, wobei bereits zwischen der Anhebeposition 25 und der Transferposition 26 mit der Schwenkbewegung der Produkte 4 zum Aufrichten der Produkte 4 begonnen wird. Die Schwenkbewegung wird nach Erreichen der Transferposition 26 weiter fortgeführt und ist vor, insbesondere kurz vor Erreichen einer Ablageposition 27 abgeschlossen. Beim Erreichen oder kurz vor dem Erreichen der Ablageposition 27 mit den Transfermitteln 7, insbesondere der Gruppenaufnahmevorrichtung 18, wird die lösbare Verbindung zwischen den Transfermitteln 7 und den Produkten 4 gelöst, insbesondere der Unterdruck zwischen den Haftmitteln 19 und der Produkte 4 aufgelöst oder beseitigt, sodass beim Erreichen der Ablageposition 27 die Produkte 4 im aufgerichteten Zustand, also mit einer senkrecht verlaufenden Längsmittelachse auf dem Kompaktierförderband 20 abgesetzt oder abgestellt werden können. Die Transfermittel 7, insbesondere die Gruppenaufnahmevorrichtung 18 wird nach dem Erreichen der Ablageposition 27 über die Transferposition 26 zurück zur Anfangsposition 24 verfahren, wo abermals das synchrone Verstellen zwischen den Transfermitteln 7 und den auf dem Förderband 3 geförderten Produkten 4 aufgenommen wird.

Besonders bevorzugt können entsprechende Sensormittel zum Einsatz kommen, um das sichere Erreichen der beschriebenen Position sowie das sichere und zuverlässige Verbinden der Produkte 4 mit den Transfermitteln 7 sowie die sichere und zuverlässige Auflösung der Verbindung festzustellen oder zu überprüfen.

### Bezugszeichen

- 1: Gruppiervorrichtung
- 2: Tasche
- 3: Förderband
- 4: Produkte
- 5: Fördereinrichtung
- 7: Transfermittel

- 14: Taschenband
- 15: Oberseite
- 16: Roboterarm
- 17: Ende
- 18: Gruppenaufnahmevorrichtung
- 19: Haftmittel
- 20: Kompaktierförderband
- 21: Vakuummittel
- 22: Gelenk
- 23: Gelenkarm
- 24: Anfangsposition
- 25: Anhebeposition
- 26: Transferposition
- 27: Ablageposition

- S: Förderstrecke
- F: Förderrichtung
- B: Breite
- L: Längsachse

## Patentansprüche

1. Verfahren zum Gruppieren, insbesondere Palettieren oder Vorpalettieren, von leeren, als Dosen, Tuben, oder Kartuschen ausgebildeten länglichen Produkten (4), wobei die Produkte (4) mit einer anliefernden Fördereinrichtung (5) bevorzugt von einer Produktionslinie zur Herstellung der Produkte (4), angeliefert und mit einer zylindrischen Mantelfläche lückenlos auf ein Förderband (3) abgelegt werden und mit diesem mit einer Fördergeschwindigkeit entlang einer Förderrichtung (F) gefördert werden, wobei aus den lückenlos geförderten Produkten (4) eine Produktgruppe umfassend mehrere lückenlos aneinander angrenzender Produkte (4) mit einem Transfermittel (7) gleichzeitig von dem Förderband (3) entnommen werden, wobei die Transfermittel (7) während der Entnahme synchron mit dem Förderband (3) und der darauf geförderten, zu entnehmenden Produktgruppe entlang der Förderstrecke (S) von einer Anfangsposition (24) in Förderrichtung (F) bis zu einer Entnahmeposition verstellt, insbesondere verfahren, werden und im Anschluss an die Entnahme die Produkte (4) der Produktgruppe gleichzeitig durch eine Schwenkbewegung, insbesondere der Transfermittel (7), senkrecht zur Förderrichtung (F) aufgerichtet, insbesondere um 90° aufgerichtet, werden, und im aufgerichteten Zustand auf einer Ablage als lückenlose sich entlang der Förderrichtung (F) erstreckende Reihe abgestellt werden.

2. Verfahren nach Anspruch 1,
**dadurch gekennzeichnet,**
**dass** die Produkte (4) auf einem sich senkrecht zur Förderrichtung (F) bewegenden Kompaktierungsförderband als lückenlose sich entlang der Förderrichtung (F) erstreckende Reihe abgestellt und vom Kompaktierungsförderband als Reihe in Richtung eines Anschlages des Kompaktierungsförderbandes abtransportiert werden.

3. Verfahren nach Anspruch 1 oder 2,
**dadurch gekennzeichnet,**
**dass** die Transfermittel (7) nach dem Abstellen der Produktgruppe auf dem Kompaktierungsförderband zur Anfangsposition (24) zurückkehren, wobei die Zeitspanne zum abermaligen Erreichen der Anfangsposition (24) geringer oder gleich lang ist, als das Verhältnis des Abstands zwischen den Längsachsen (L) der äußeren Produkte (4) der Produktgruppe und der Fördergeschwindigkeit.

4. Verfahren nach einem der Ansprüche 1 bis 3,
**dadurch gekennzeichnet,**
**dass** die Zeitspanne zwischen zwei aufeinanderfolgenden Positionierungen der Transfermittel (7) an der Anfangsposition (24) weniger als 10s, bevorzugt weniger als 8s, besonders bevorzugt weniger als 6s beträgt.

5. Verfahren nach einem der Ansprüche 1 bis 4,
**dadurch gekennzeichnet,**
**dass** im Rahmen der Entnahme der Produkte (4) die zu entnehmenden Produktgruppe, bevorzugt jeweils einzeln, mit Haftmitteln (19) der Transfermittel (7) lösbar verbunden werden und die Verbindung erst beim Abstellen der Produktgruppe auf dem Kompaktierungsförderband wieder aufgehoben wird.

6. Verfahren nach Anspruch 5,
**dadurch gekennzeichnet,**
**dass** im Rahmen der Entnahme der Produkte (4) die Haftmittel (19) eine Verbindung mit den Produkten (4) über einen seitens der Haftmittel (19) aufgebauten Unterdruck erzeugen.

7. Verfahren nach einem der Ansprüche 1 bis 6,
**dadurch gekennzeichnet,**
**dass** im Rahmen der Entnahme die Produktgruppe von den Transfermitteln (7) gleichzeitig vom Förderband (3) angehoben werden, wobei die Transfermittel (7) während des Anhebens synchron mit dem Förderband (3) und der darauf geförderten, zu entnehmenden Produktgruppe entlang der Förderstrecke (S) von einer Anhebeposition (25) in Förderrichtung (F) bis zu einer Entnahmeposition verstellt, insbesondere verfahren werden.

8. Verfahren nach einem der Ansprüche 1 bis 7,
**dadurch gekennzeichnet,**
**dass** die Transfermittel (7) die Produktgruppe jeweils alternierend um einen Radius der, bevorzugt zylindrischen, Mantelfläche der Produkte (4) versetzt auf der Ablage, insbesondere auf dem Kompaktierungsförderband abstellen.

9. Gruppiervorrichtung, insbesondere zum Palettieren oder Vorpalletieren von leeren, als Dosen, Tuben, oder Kartuschen ausgebildeten länglichen Produkten (4), ausgebildet zum Durchführen des Verfahrens nach einem der vorangehenden Ansprüche, umfassend eine die Produkte (4), bevorzugt von einer Produktionslinie zur Herstellung der Produkte (4), anliefernde Fördereinrichtung (5) sowie Transfermittel (7) zum Transferieren einer lückenlosen Produktgruppe von der Fördereinrichtung (5) auf eine Ablage unter Aufrichtung der Produkte (4) sowie Antriebsmittel und Steuermittel für die Antriebsmittel, wobei die Steuermittel die Antriebsmittel derart steuern, dass die Produkte (4) angeliefert und mit einer zylindrischen Mantelfläche lückenlos auf ein Förderband (3) der Fördereinrichtung (5) abgelegt werden und mit diesem mit einer Fördergeschwindigkeit entlang einer Förderrichtung (F) gefördert werden, wobei aus den lückenlos geförderten Produkten (4) eine Produktgruppe umfassend mehrere lückenlos aneinander angrenzender Produkte (4) mit den Transfermitteln (7) gleichzeitig von dem Förderband (3) entnommen werden, wobei die Transfermittel (7) während der Entnahme synchron mit dem Förderband (3) und der darauf geförderten, zu entnehmenden Produktgruppe entlang der Förderstrecke (S) von einer Anfangsposition (24) in Förderrichtung (F) bis zu einer Entnahmeposition verstellt, insbesondere verfahren, werden und im Anschluss an die Entnahme die Produkte (4) der Produktgruppe gleichzeitig durch eine Schwenkbewegung, insbesondere der Transfermittel (7), senkrecht zur Förderrichtung (F) aufgerichtet, insbesondere um 90° aufgerichtet, werden, und im aufgerichteten Zustand auf einer Ablage als lückenlose sich entlang der Förderrichtung (F) erstreckende Reihe abgestellt werden.

10. Gruppiervorrichtung nach Anspruch 9,
**dadurch gekennzeichnet,**
**dass** die Ablage als ein sich senkrecht zur Förderrichtung (F) bewegendes Kompaktierungsförderband ausgebildet ist und die Produkte (4) als lückenlose sich entlang der Förderrichtung (F) erstreckende Reihe auf dem Kompaktierförderband (20) abgestellt und als Reihe in Richtung eines Anschlages des Kompaktierungsförderbandes abtransportiert werden.

11. Gruppiervorrichtung nach Anspruch 9 oder 10,
**dadurch gekennzeichnet,**
**dass** die Transfermittel (7) einen Roboterarm (16) mit zumindest zwei über ein Gelenk (22) verbundene Gelenkarme (23) aufweist, an dessen frei beweglichem Ende eine wechselbare Gruppenaufnahmevorrichtung (18), insbesondere eine Gruppenaufnahmeplatte, angeordnet ist.

12. Gruppiervorrichtung nach Anspruch 11,
**dadurch gekennzeichnet,**
**dass** die Gruppenaufnahmevorrichtung (18) schwingungsreduziert ausgebildet ist und/oder aus einem steifen Material, insbesondere einem Kohlefasermaterial, gebildet ist.

13. Gruppiervorrichtung nach Anspruch 11 oder 12,
**dadurch gekennzeichnet,**
**dass** die Gruppenaufnahmevorrichtung (18) ein Gewicht von weniger als 2000g, bevorzugt von weniger als 1500g, besonders bevorzugt von weniger als 1200g, aufweist.

14. Gruppiervorrichtung nach einem der Ansprüche 11 bis13,
**dadurch gekennzeichnet,**
**dass** die Gruppenaufnahmevorrichtung (18) eine Länge von 100cm bis 130cm, bevorzugt von 110cm bis 120cm aufweist.

15. Gruppiervorrichtung nach einem der Ansprüche 11 bis 14,
**dadurch gekennzeichnet,**
**dass** die Gruppenaufnahmevorrichtung (18) Haftmittel (19) umfasst, die dazu eingerichtet sind eine, bevorzugt individuelle, lösbare Verbindung mit den Produkten (4) der Produktgruppe herzustellen und aufzulösen.

16. Gruppiervorrichtung nach einem der Ansprüche 9 bis 15,
**gekennzeichnet durch**
je zwei Haftmittel (19) zum Erzeugen einer lösbaren Verbindung mit je einem Produkt(4).

17. Gruppiervorrichtung nach einem der Ansprüche 11 bis 16,
**dadurch gekennzeichnet,**
**dass** die Gruppenaufnahmevorrichtung (18) über die Länge verteilt eine Vielzahl von vordefinierten Befestigungsstellen zur Befestigung der Haftmittel (19) aufweist.

18. Gruppiervorrichtung nach einem der Ansprüche 11 bis 17,
**dadurch gekennzeichnet,**
**dass** die Haftmittel (19) in Längsrichtung der Gruppenaufnahmevorrichtung (18) einen Abstand aufweisen, der dem Abstand der Längsachsen (L) der Produkte (4) auf dem Förderband (3), insbesondere dem Durchmesser der Produkte (4), entspricht.

19. Gruppiervorrichtung nach einem der Ansprüche 15 bis 18,
**gekennzeichnet durch**
Vakuummittel (21), insbesondere zum Erzeugen eines eine Verbindung zwischen den Produkten (4) und den Haftmitteln (19) bewirkenden Unterdrucks.

20. Gruppiervorrichtung nach einem der Ansprüche 9 bis 19,
**gekennzeichnet durch**
signalleitend mit den Steuermitteln verbundene Sensormittel zur Detektion der Position und/oder Geschwindigkeit des Förderbandes (3) sowie zur Detektion des Zustands der Transfermittel (7), insbesondere der Gruppenaufnahmevorrichtung (18).

21. System umfassend eine Gruppiervorrichtung (1) nach einem der Ansprüche 9 bis 20 sowie eine Herstellungseinrichtung zum Herstellen der zu gruppierenden Produkte (4) und zum Versorgen der anliefernden Fördereinrichtung (5) mit den Produkten (4).

22. System nach Anspruch 21,
**gekennzeichnet durch**,
ein Ablagesystem zum Aufnehmen einer Lagen von aufgestellten und kompaktierten Produkten (4) von dem Kompaktierförderband (20) und zum Ablegen der Lage von Produkten (4) auf einer Ablagevorrichtung, insbesondere auf einer Palette.

## Claims

1. A method for grouping, in particular palletizing or pre-palletizing, empty, oblong products (4) realized as cans, tubes or cartridges, the products (4) being delivered by a delivering conveyor device (5), preferably from a production line for producing the products (4), and a cylindrical lateral surface of the products (4) being placed onto a conveyor belt (3) such that there are no gaps, and the products (4) being conveyed by means of the conveyor belt (3) in/along a conveyor direction (F) at a conveyor speed, wherein a product group which is made up of the products (4) conveyed without gaps and comprises several products (4) which adjoin one another without gaps is simultaneously removed from the conveyor belt (3) using transfer means (7), wherein, during the removal, the transfer means (7) are displaced/moved, in particular driven/displaced, along the conveyor line (S) in the conveyor direction (F) from a starting position (24) to a removal position in synchronization with the conveyor belt (3) and the product group to be removed and conveyed thereon, and, after the removal, the products (4) of the product group are simultaneously erected perpendicular, in particular by 90°, to the conveyor direction (F) via a pivoting movement, in particular by means of the transfer means (7) and are placed on a storage area in an erected row without gaps which extends in the conveyor direction (F).

2. The method according to claim 1,
**characterized in that**
the products (4) are placed in a row without gaps which extends in the conveyor direction (F) on a compaction conveyor belt which moves perpendicular to the conveyor direction (F) and are transported away in a row from the compaction conveyor belt in the direction of a stop of the compaction conveyor belt.

3. The method according to claim 1 or 2,
**characterized in that**
the transfer means (7) return to the starting position (24) after placing the product group onto the compaction conveyor belt, the period of time for again returning to the starting position (24) being shorter than or as long as the ratio of the distance between the longitudinal axes (L) of the outer products (4) of the product group and the conveyor speed.

4. The method according to any one of claims 1 to 3,
**characterized in that**
the period of time between two subsequent placements of the transfer means (7) at the starting position (24) is shorter than 10 s, preferably shorter than 8 s, particularly preferably shorter than 6 s.

5. The method according to any one of claims 1 to 4,
**characterized in that**,
in the course of the removal of the products (4), the product groups to be removed are detachably connected, preferably individually, to bonding means (19) of the transfer means (7) and the connection is not dissolved until the product group is placed on the compaction conveyor belt.

6. The method according to claim 5,
**characterized in that**,
in the course of the removal of the products (4), the bonding means (19) establish a connection with the products (4) by means of a vacuum which is generated by the bonding means (19).

7. The method according to any one of claims 1 to 6,
**characterized in that**,
in the course of the removal, the product group is simultaneously lifted from the conveyor belt (3) by the transfer means (7), wherein, during the lifting process, the transfer means (7) are displaced/moved, in particular driven/displaced, along the conveyor line (S) in the conveyor direction (F) from a lifting position (25) to a removal position in synchronization with the conveyor belt (3) and the product group to be removed and conveyed thereon.

8. The method according to any one of claims 1 to 7,
**characterized in that**
the transfer means (7) place the product group onto the storage area, in particular onto the compaction conveyor belt, in an alternating manner so as to be at an offset by a radius of the lateral surface of the products (4) which is preferably cylindrical.

9. A grouping device, in particular for palletizing or pre-palletizing empty, oblong products (4) realized as cans, tubes or cartridges, the grouping device being configured to execute the method according to any one of the preceding claims, the grouping device comprising a conveyor device (5) delivering the products (4), preferably from a production line for producing the products (4), and comprising transfer means (7) for transferring a product group without gaps from the conveyor device (5) onto a storage area whilst erecting the products (4), and comprising drive means and control means for the drive means, the control means controlling the drive means in such a manner that the products (4) are delivered and are placed without gaps onto a conveyor belt (3) of the conveyor device (5) on a cylindrical lateral surface of the products (4) and conveyed by means of the conveyor belt (3) in/along a conveyor direction (F) at a conveyor speed, wherein a product group which is made up of the products (4) conveyed without gaps and comprises several products (4) which adjoin one another without gaps is simultaneously removed from the conveyor belt (3) using the transfer means (7), wherein, during the removal, the transfer means (7) are displaced/moved, in particular driven/displaced, along the conveyor line (S) in the conveyor direction (F) from a starting position (24) to a removal position in synchronization with the conveyor belt (3) and the product group to be removed and conveyed thereon, and, after the removal, the products (4) of the product group are simultaneously erected perpendicular, in particular by 90°, in relation to the conveyor direction (F) via a pivoting movement, in particular by means of the transfer means (7), and are placed on a storage area in an erected row without gaps which extends in the conveyor direction (F).

10. The grouping device according to claim 9,
**characterized in that**
the storage area is realized as a compaction conveyor belt which moves perpendicular to the conveyor direction (F) and **in that** the products (4) are placed on the compaction conveyor belt (20) in a row without gaps which extends in the conveyor direction (F) and **in that** said products (4) are transported away in a row in the direction of a stop of the compaction conveyor belt.

11. The grouping device according to claim 9 or 10,
**characterized in that**
the transfer means (7) have a robot arm (16) which has at least two articulated arms (23) connected to one another via a joint (22), a changeable group reception device (18), in particular a group reception panel, being disposed on the freely movable end of said joint (22).

12. The grouping device according to claim 11,
**characterized in that**
the group reception device (18) is realized so as to be reduced in vibration and/or is made of a rigid material, in particular a carbon fiber material.

13. The grouping device according to claim 11 or 12,
**characterized in that**
the group reception device (18) has a weight of less than 2000 g, preferably of less than 1500 g, particularly preferably of less than 1200 g.

14. The grouping device according to any one of claims 11 to 13,
**characterized in that**
the group reception device (18) has a length of 100 cm to 130 cm, preferably of 110 cm to 120 cm.

15. The grouping device according to any one of claims 11 to 14,
**characterized in that**
the group reception device (18) comprises bonding means (19) which are configured to establish and disengage a detachable connection, which is preferably individual, with the products (4) of the product group.

16. The grouping device according to any one of claims 9 to 15,
**characterized by**
two bonding means (19) for establishing a detachable connection to each product (4).

17. The grouping device according to any one of claims 11 to 16,
**characterized in that**
the group reception device (18) has a plurality of predefined fastening points which are distributed along its length for fastening the bonding means (19).

18. The grouping device according to any one of claims 11 to 17,
**characterized in that**
the bonding means (19) are disposed at a distance in the longitudinal direction of the group reception device (18) which corresponds to the distance of the longitudinal axes (L) of the products (4) on the conveyor belt (3), in particular to the diameter of the products (4).

19. The grouping device according to any one of claims 15 to 18,
**characterized by**
vacuum means (21), in particular for generating a vacuum which effects a connection between the products (4) and the bonding means (19).

20. The grouping device according to any one of claims 9 to 19,
**characterized by**
sensor means which are connected to the control means in a signal-conducting manner and which are configured for detecting the position and/or speed of the conveyor belt (3) and for detecting the state of the transfer means (7), in particular of the group reception device (18).

21. A system comprising a grouping device (1) according to any one of claims 9 to 20 and a production device for producing the products (4) to be grouped and for supplying the delivering conveyor device (5) with the products (4).

22. The system according to claim 21,
**characterized by**
a storage area system for receiving a layer of erected and compacted products (4) from the compaction conveyor belt (20) and for placing the layer of products (4) onto a storage area device, in particular a pallet.

## Revendications

1. Procédé permettant de grouper, notamment palettiser ou prépalettiser, des produits (4) oblongs vides réalisés comme boîtes, tubes ou cartouches, lesdits produits (4) étant livrés par un convoyeur (5) livrant, de préférence à partir d'une chaîne de production pour fabriquer les produits (4), et une surface d'enveloppe cylindrique desdits produits (4) étant placée sur un convoyeur à courroie (3) de telle manière qu'il n'y a aucuns espaces, et lesdits produits (4) étant transportés à l'aide dudit convoyeur à courroie (3) le long d'une direction de transport (F) à une vitesse de convoyage, un groupe de produits qui est composé des produits (4) transportés sans espaces et comprend plusieurs produits (4) adjacents sans espaces étant prélevé simultanément sur le convoyeur à courroie (3) à l'aide d'un moyen de transfert (7), lesdits moyens de transfert (7) étant mûs, notamment déplacés, pendant le prélèvement, le long du parcours de transport (S) dans la direction de transport (F) à partir d'une position de départ (24) jusqu'à une position de prélèvement en synchrone avec le convoyeur à courroie (3) et le groupe de produits qui est transporté sur ledit convoyeur à courroie (3) et destiné à être prélevé, et, après le prélèvement, les produits (4) du groupe de produits étant dressés simultanément perpendiculairement, notamment de 90°, par rapport à la direction de transport (F) par un mouvement de pivotement, notamment un mouvement de pivotement des moyens de transfert (7), et étant placés, en état dressé, sur un dépôt comme ligne sans espaces qui s'étend dans la direction de transport (F).

2. Procédé selon la revendication 1,
**caractérisé en ce que**
les produits (4) sont placés sur un convoyeur de compaction qui se meut perpendiculairement par rapport à la direction de transport (F), comme ligne sans espaces qui s'étend le long de la direction de transport, et sont enlevés du convoyeur de compaction comme ligne dans la direction d'une butée du convoyeur de compaction.

3. Procédé selon la revendication 1 ou 2,
**caractérisé en ce que**
les moyens de transfert (7) rentrent à la position de départ (24) après avoir placé le groupe de produits sur le convoyeur de compaction, la période pour rentrer à la position de départ (24) de nouveau étant plus courte que ou également longue que le rapport de la distance entre les axes longitudinaux (L) des produits derniers (4) du groupe de produits et la vitesse de transport.

4. Procédé selon l'une quelconque des revendications 1 à 3,
**caractérisé en ce que**
la période entre deux placements subséquents des moyens de transfert (7) à la position de départ (24) est plus courte que 10 s, de préférence plus courte que 8 s, encore de préférence plus courte que 6 s.

5. Procédé selon l'une quelconque des revendications 1 à 4,
**caractérisé en ce que**
dans le cadre du prélèvement des produits (4), les groupes de produits à être prélevés sont reliés de manière détachable, de préférence séparément, à des moyens de liaison (19) des moyens de transfert (7) et la liaison n'est résiliée que jusqu'à ce que le groupe de produits est placé sur le convoyeur de compaction.

6. Procédé selon la revendication 5,
**caractérisé en ce que**
dans le cadre du prélèvement des produits (4), les moyens de liaison (19) génèrent une liaison aux produits (4) au moyen d'un vide qui est généré par les moyens de liaison (19).

7. Procédé selon l'une quelconque des revendications 1 à 6,
**caractérisé en ce que**
dans le cadre du prélèvement, les moyens de transfert (7) soulèvent le groupe de produits uniformément du convoyeur à courroie (3), les moyens de transfert (7), alors qu'ils soulèvent le groupe de produits, étant mûs, notamment déplacés, le long du parcours de transport (S) dans la direction de transport (F) à partir d'une position de soulèvement (25) jusqu'à une position de prélèvement, en synchrone avec le convoyeur à courroie (3) et le groupe de produits à être prélevé et transporté sur celuici.

8. Procédé selon l'une quelconque des revendications 1 à 7,
**caractérisé en ce que**
les moyens de transfert (7) placent le groupe de produits sur le dépôt, notamment sur le convoyeur de compaction, de manière alternante et décalé d'un rayon de la surface d'enveloppe des produits (4) qui est de préférence cylindrique.

9. Dispositif de groupement, notamment destiné à palettiser ou prépalettiser des produits (4) oblongs vides réalisés comme boîtes, tubes ou cartouches, ledit dispositif de groupement étant configuré pour exécuter le procédé selon l'une quelconque des revendications précédentes, ledit dispositif de groupement comprenant un convoyeur (5) qui livre les produits (4), de préférence à partir d'une chaîne de production pour fabriquer les produits (4), et comprenant des moyens de transfert (7) pour transférer un groupe de produits sans espaces du convoyeur (5) sur un dépôt en dressant les produits (4) et comprenant des moyens d'entraînement et des moyens de commande pour les moyens d'entraînement, lesdits moyens de commande commandant les moyens d'entraînement de telle manière que les produits (4) sont livrés et placés avec une surface d'enveloppe cylindrique sur un convoyeur à courroie (3) de telle manière qu'il n'y a aucuns espaces et transportés par ledit convoyeur à courroie (3) le long d'une direction de transport (F) avec une vitesse de transport, un groupe de produits qui est composé des produits (4) transportés sans espaces et qui comprend plusieurs produits (4) adjacents sans espaces étant prélevé simultanément du convoyeur à courroie (3) par les moyens de transfert (7), lesdits moyens de transfert (7) étant mûs, notamment déplacés, pendant le prélèvement, le long du parcours de transport (S) dans la direction de transport (F) à partir d'une position de départ (24) vers une position de prélèvement en synchrone avec le convoyeur à courroie (3) et le groupe de produits qui est transporté sur ledit convoyeur à courroie (3) et destiné à être prélevé, et, après le prélèvement, les produits (4) du groupe de produits étant dressés simultanément perpendiculairement, notamment by 90°, par rapport à la direction de transport (F) par un mouvement de pivotement, notamment un mouvement de pivotement des moyens de transfert (7), et étant placés, en état dressé, sur un dépôt comme ligne sans espaces qui s'étend dans la direction de transport.

10. Dispositif de groupement selon la revendication 9,
**caractérisé en ce que**
le dépôt est réalisé comme convoyeur de compaction qui se meut perpendiculairement par rapport à la direction de transport (F) et **en ce que** les produits (4) sont placés sur le convoyeur de compaction (20) comme ligne sans espaces qui s'étend le long de la direction de transport (F) et sont enlevés comme ligne dans la direction d'une butée du convoyeur de compaction.

11. Dispositif de groupement selon la revendication 9 ou 10,
**caractérisé en ce que**
les moyens de transfert (7) comportent un bras robotique (16) ayant au moins deux bras articulés (23) reliés l'un à l'autre par une articulation (22), un dispositif de réception de groupes (18) changeable, notamment une plaque de réception de groupes, étant disposé sur l'extrémité de ladite articulation (22) qui est déplaçable librement.

12. Dispositif de groupement selon la revendication 11,
**caractérisé en ce que**
le dispositif de réception de groupes (18) est réalisé de sorte que les vibrations sont réduites et/ou est formé d'un matériau rigide, notamment un matériau à fibres de carbone.

13. Dispositif de groupement selon la revendication 11 ou 12,
**caractérisé en ce que**
le dispositif de réception de groupes (18) a un poids de moins de 2000 g, de préférence de moins de 1500 g, encore de préférence de moins de 1200 g.

14. Dispositif de groupement selon l'une quelconque des revendications 11 à 13,
**caractérisé en ce que**
le dispositif de réception de groupes (18) a une longueur entre 100 cm et 130 cm, de préférence entre 110 cm et 120 cm.

15. Dispositif de groupement selon l'une quelconque des revendications 11 à 14,
**caractérisé en ce que**
le dispositif de réception de groupes (18) comprend des moyens de liaison (19) qui sont configurés pour établir et défaire une liaison avec les produits (4) du groupe de produits qui est détachable et de préférence individuelle.

16. Dispositif de groupement selon l'une quelconque des revendications 9 à 15,
**caractérisé par**
deux moyens de liaison (19) pour établir une liaison détachable avec chaque produit (4).

17. Dispositif de groupement selon l'une quelconque des revendications 11 à 16,
**caractérisé en ce que**
le dispositif de réception de groupes (18) comporte une pluralité de points de fixation prédéfinis qui sont distribués le long de la longueur pour fixer les moyens de liaison (19).

18. Dispositif de groupement selon l'une quelconque des revendications 11 à 17,
**caractérisé en ce que**
les moyens de liaison (19) sont disposés à une distance dans la direction longitudinale du dispositif de réception de groupes (18) qui correspond à la distance des axes longitudinaux (L) des produits (4) sur le convoyeur à courroie (3), notamment au diamètre des produits (4).

19. Dispositif de groupement selon l'une quelconque des revendications 15 à 18,
**caractérisé par**
des moyens de vide (21), notamment pour générer un vide qui produit une liaison entre les produits (4) et les moyens de liaison (19).

20. Dispositif de groupement selon l'une quelconque des revendications 9 à 19,
**caractérisé par**
des moyens de capteur qui sont relies avec les moyens de commande de sorte que des signaux sont conduits et qui sont configurés pour détecter la position et/ou vitesse du convoyeur à courroie (3) et pour détecter l'état des moyens de transfert (7), notamment du dispositif de réception de groupes (18).

21. Système comprenant un dispositif de groupement (1) selon l'une quelconque des revendications 9 à 20 et un dispositif de fabrication destiné à fabrique les produits (4) à être groupés et destiné à alimenter le convoyeur (5) livrant en les produits (4).

22. Système selon la revendication 21,
**caractérisé par**
un système de dépôts pour recevoir une couche de produits (4) dressés et compactés du convoyeur de compaction (20) et pour placer la couche de produits (4) sur un dispositif de dépôt, notamment une palette.
